(19) Europäisches Patentamt
European Patent Office
Office européen des brevets

(11) **EP 2 479 209 A1**

(12) **EUROPEAN PATENT APPLICATION**
published in accordance with Art. 153(4) EPC

(43) Date of publication:
**25.07.2012 Bulletin 2012/30**

(21) Application number: **10817251.1**

(22) Date of filing: **16.09.2010**

(51) Int Cl.:
*C08J 5/00* $^{(2006.01)}$    *B29C 71/02* $^{(2006.01)}$
*C08G 59/02* $^{(2006.01)}$    *C08G 65/18* $^{(2006.01)}$
*C08G 77/04* $^{(2006.01)}$    *C08J 7/00* $^{(2006.01)}$
*G02C 7/02* $^{(2006.01)}$

(86) International application number:
**PCT/JP2010/066066**

(87) International publication number:
**WO 2011/034138 (24.03.2011 Gazette 2011/12)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.09.2009 JP 2009217788
22.04.2010 JP 2010099086**

(71) Applicant: **Nippon Shokubai Co., Ltd.
Osaka-shi, Osaka 541-0043 (JP)**

(72) Inventors:
• **NAKAMURA Jun-ichi
Suita-shi
Osaka 564-8512 (JP)**
• **MATSUMOTO Ai
Suita-shi
Osaka 564-8512 (JP)**

(74) Representative: **Hart-Davis, Jason et al
Cabinet Beau de Loménie
158, rue de l'Université
75340 Paris Cedex 07 (FR)**

(54) **PROCESS FOR PRODUCTION OF CURED MOLDED ARTICLE, AND CURED MOLDED ARTICLE**

(57)    Provided is a process for production of a cured molded article capable of readily producing a transparent and discoloration-free cured molded article that exhibits a low shrinkage ratio and an excellent heat resistance, abrasion resistance, and mold release behavior. Also provided is a cured molded article that is useful in a variety of applications, for example, as an optical member. The process for production of a cured molded article from a curable resin composition that comprises a condensable inorganic compound, a curable organic compound, and a curing agent is a process for production of a cured molded article including a first step composed of a step of thermally curing the curable resin composition at 80 to 200°C and/or a step of curing the curable resin composition by exposure to active-energy radiation, and a second step of subjecting the cured material obtained in the first step to a thermal cure at above 200°C but not more than 500°C.

EP 2 479 209 A1

**Description**

TECHNICAL FIELD

The present invention relates to a process for production of a cured molded article and to a cured molded article. More particularly, the present invention relates to a process for production of a cured molded article that is used in various applications, for example, as an optical member, a machine part, an electrical/electronic part, an automobile part, a material in civil engineering and construction, and also relates to a cured molded article obtained by this production process.

BACKGROUND ART

Cured molded articles are cured materials that are produced by curing a resin composition and are used in a variety of applications, for example, as optical elements and members, as machine and instrument parts, as electrical/electronic parts, as automobile parts, and as materials in civil engineering and construction. There have been various developments with regard to the curable resin compositions that are the starting materials for cured molded articles. For example, a resin composition that contains an inorganic substance not only can provide a reduced thermal expansion coefficient, but also makes it possible to control the appearance of the resin composition and the cured material therefrom through the combination of the refractive indices of the inorganic substance and the resin and to bring about transparency, and for these reasons such a resin composition is particularly useful as a material for obtaining a cured molded articles for application to electrical/electronic parts and optical elements and members. The use of plastic lenses, which use a thermoplastic resin such as an acrylic resin (PMMA), polycarbonate (PC), or polycycloolefin, in place of inorganic glass is going forward in these applications, for example, for the digital camera module installed in a portable phone, due to the advances being made in the miniaturization of cured materials and also due to the requirements for cost reduction. Investigations have also been carried out in recent years into applications that can also be used outdoors, such as vehicle-mounted cameras, security cameras, display devices (e.g., LEDs), and so forth. These outdoor-use applications involve long-term exposure to ultraviolet radiation and exposure to high temperatures during the summer and also require, inter alia, resistance to the outdoor environment, e.g., dust and cleaning solutions, and thus require a high level of resistance to heat, abrasion, and light. However, cured materials that use thermoplastic resins do not have satisfactory properties in these areas, and the production of scratches, wear, and abrasion by, e.g., dust and cleaning solutions, has made it necessary to dispose a hard coat film or a cover glass (inorganic glass) on the upper layer, which is very expensive. In addition, an optical member for a sensor subject to physical contact, e.g., a touchscreen, must also be strong.

There have also been investigations into art related to cured materials that use a thermosetting resin, and various types of cured materials have been developed based on the cure of highly reactive epoxy compounds. However, epoxy compounds are characterized by an excellent adhesiveness/tight adhesion and as a consequence they exhibit unsatisfactory mold release properties; for example, they are unsuitable for use in methods that produce a molded article using a mold. Methods have therefore been developed that, through the co-use of a mold release agent, are able to provide a molded article that exhibits high dimensional accuracy and an excellent ability to replicate the mold. For example, a transparent organic resin composition has been disclosed that contains an organic resin and at least one compound selected from the group consisting of $C_{8-36}$ alcohols, carboxylic acids, carboxylate esters, and carboxylate salts (refer, for example, to Patent Document 1).

Within the realm of art for improving/enhancing the heat resistance and mechanical properties of cured materials, a resin composition has been disclosed that requires an epoxy-functional compound for the organic resin component and an organosiloxane compound as an inorganic compound (refer, for example, to Patent Document 2). Patent Document 2 states that a timewise increase in viscosity occurs even at normal temperatures when a functional group-bearing polysiloxane compound is used, and that when an epoxy compound is also used, their co-use results, due to the high curing reactivity of the epoxy compound, in the occurrence of a substantial viscosity increase/gelation. Patent Document 2 also states that the use of an organosiloxane compound bearing a low-reactivity organic group as its functional group brings about an inhibition of the viscosity increase/gelation while yielding improvements in the heat resistance and mechanical properties.

In addition, with the objectives of providing a heat resistance capable of withstanding solder reflow and obtaining a lens that exhibits a low moisture absorption, high transparency, and low thermal expansion, a resin composition for lens molding has been investigated in which a cage-type silsesquioxane, an organohydrogenpolysiloxane, an ethylenically unsaturated compound, and a curing catalyst are essential components and, for example, the number of functional groups in each component is adjusted into prescribed ranges (refer, for example, to Patent Document 3).

[Patent Document 1] Japanese Patent Application Laid-open No. 2008-088249 (for example, page 2)

[Patent Document 2] Japanese Patent Application Laid-open No. 2008-133442 (for example, pages 2 and 4 to 5)
[Patent Document 3] Japanese Patent Application Laid-open No. 2009-155442 (for example, page 2)

DISCLOSURE OF THE INVENTION

As noted above, various curable resin compositions have been investigated, and, as in Patent Documents 1 and 2, art has been developed relative to resin compositions and cured materials therefrom that are very useful in a variety of applications, not the least of which are optical applications. However, there is still room for advancement with regard to more easily obtaining cured molded articles that exhibit a high surface hardness, i.e., an excellent abrasion resistance, in order to make possible a better adapted service even in outdoor-use applications where the use environment is more severe, that exhibit a low shrinkage ratio, and that have a better heat resistance and mold release performance.

The present invention was achieved considering the circumstances described above and has as an object the introduction of a process for production of a cured molded article that is capable of easily producing a transparent, discoloration-free cured molded article that exhibits a low shrinkage ratio and an excellent heat resistance, abrasion resistance, and mold release performance. A further object of the present invention is to provide a cured molded article that is useful for a variety of applications, for example, as an optical member.

On the occasion of various investigations into the curable resin compositions that are starting materials for cured molded articles, the present inventors noted that curable organic compounds based on, for example, the epoxy group or oxetane ring are easy to shape (mold) and are useful as materials (the organic resin component) for various applications, e.g., as optical members, and so forth. The present inventors further noted that when a condensable inorganic compound is used, this can impart optical properties and mechanical properties or can improve the optical properties and mechanical properties, and in addition makes it possible to obtain a highly releasable cured molded article. The present inventors also discovered that when a curable organic compound and a condensable inorganic compound are cured in the presence of a curing agent, a satisfactory cure may not occur depending on the curing conditions, and a cured molded article having satisfactory properties and an excellent surface appearance may not be obtained due to, inter alia, foaming and/or a sudden viscosity increase/gelation during curing and caused by the high cure reactivity of the curable organic compound and the high shrinkage rate of the condensable inorganic compound. The present inventors further discovered that the properties possessed by these components individually cannot be satisfactorily displayed in the cured material by just using ordinary means to bring about the cure of a resin composition that contains a curable organic compound and a condensable inorganic compound. The present inventors also discovered in particular that these phenomena become quite prominent at a high content proportion for the condensable inorganic compound.

The present inventors then carried out cured molded article production by dividing the curing step into two stages, i.e., by having the first-stage first step be a thermal curing step at a prescribed temperature and/or a curing step based on exposure to active-energy radiation and having the second step be a high-temperature thermal curing step. The present inventors discovered for the first time that when a cured molded article is produced by doing this, the curing reaction of the curable organic compound proceeds rapidly in the first step while the curing reaction of the condensable inorganic compound proceeds weakly, and the curing reaction of the condensable inorganic compound then proceeds mainly in the second step, the second step being carried out with the curable organic compound being in almost completely cured state. It was discovered that when this process is used, a low-shrinkage organic resin matrix, i.e., a template, is formed by the first step by the cure of the curable organic compound and the condensable inorganic compound is cured therewithin by the second step, resulting in an inhibition of cure shrinkage, the sharp viscosity increase/gelation, foaming, and so forth, and making possible the facile production of a cured molded article in which the excellent properties possessed by each of the curable organic compound and condensable inorganic compound are synergistically combined with a loss thereof. The present inventors were thus able to achieve an elegant and complete solution to the previously described problems. The present inventors also discovered that, even when the curable resin composition submitted to this cured molded article production has a large content of the condensable inorganic compound, defects are not generated during curing and a cured molded article having even better mechanical properties, e.g., surface hardness and heat resistance, is obtained. It was also discovered that, due to the high mold release performance, the cured molded article exhibits an excellent dimensional accuracy and an excellent ability to replicate the mold. It was further discovered that, because the cured molded article obtained by this production process has a special composition that has not been provided by the prior production processes, it strongly exhibits the various properties required in particular of optical members and elements, and, when used in particular for a lens, is able to substantially display various properties, e.g., hardness, heat resistance, abrasion resistance, transparency, low shrinkage, light resistance, and releasability. The present invention was achieved based on these discoveries.

Thus, the present invention is a process for production of a cured molded article from a curable resin composition that comprises a condensable inorganic compound, a curable organic compound, and a curing agent, the production process comprising a first step composed of a step of thermally curing the curable resin composition at 80 to 200°C and/or a step of curing the curable resin composition by exposure to active-energy radiation; and a second step of subjecting the cured material obtained in the first step to a thermal cure at above 200°C but not more than 500°C.

The present invention is also a process for production of a cured molded article from a curable resin composition that comprises a condensable group-bearing polysiloxane compound, a ring-opening polymerizable group-bearing compound, and a curing agent, the production process comprising a first step composed of a step of thermally curing the curable resin composition at 80 to 200°C and/or a step of curing the curable resin composition by exposure to active-energy radiation; and a second step of subjecting the cured material obtained in the first step to a thermal cure at above 200°C but not more than 500°C.

The present invention is also a cured molded article that comprises a metalloxane component and an organic resin component, wherein

the content of a metal element constituting the metalloxane component is at least 10 mass% relative to the total mass of the cured molded article of 100 mass%;

the content, in the metal element constituting the metalloxane component, of the metal element for which the number of bonds with a hydrocarbon group is n-1 or n-2 (n is an atomic valence of the metal element and represents an integer equal to or greater than 2) is not more than 50 atom% relative to the total amount of the metal element constituting the metalloxane component of 100 atom%;

the content, in the metal element constituting the metalloxane component, of the metal element having a bond represented by Y-M (M represents a metal element and Y represents at least one type selected from the group consisting of a hydrogen atom, a halogen atom, a hydroxyl group, and an RO group (R represents a hydrocarbon group)) is not more than 35 atom% relative to the total amount of the metal element constituting the metalloxane component of 100 atom%; and

the content of a component presenting a particulate form in the metalloxane component is not more than 50 mass% relative to the total mass of the metalloxane component of 100 mass%.

The details of the present invention are given therebelow.

The production process of the present invention is a process comprises a first step that is a step of thermally curing the curable resin composition (also referred to simply as the "resin composition") at 80 to 200°C, a step of curing the curable resin composition by exposure to active-energy radiation, or a step of thermally curing the curable resin composition at 80 to 200°C and curing the curable resin composition by exposure to active-energy radiation; and a second step of subjecting the cured material obtained in the first step to a thermal cure at above 200°C but not more than 500°C. Insofar as the functional effects of the present invention are not impaired, the production process of the present invention may also contain other steps that carried out as ordinary shaping (molding) steps.

The curing temperature is suitably 80 to 200°C when thermal curing is performed in the first step. At below 80°C, a satisfactory cure cannot be obtained for the curable resin composition and a low-shrinkage organic resin matrix cannot be produced, and this may result in a large cure shrinkage in the thermal cure step of the ensuing second stage. At above 200°C, the curing reaction based on the condensation reaction of the condensable inorganic compound becomes prominent, which results in a large cure shrinkage due to the condensable inorganic compound. In addition, the foaming caused by the volatilization of, e.g., the water or alcohol that is produced as a by-product by the condensation reaction may make it impossible to carry out the curing reaction or may prevent the production of a cured molded article with a high strength, a high surface hardness, and a high-quality appearance. Moreover, a satisfactory mold release performance will not be generated and a cured molded article having an excellent dimensional accuracy and exhibiting an excellent mold replication performance may not be obtained as a consequence. This cure temperature is preferably at least 100°C and is preferably not more than 160°C.

The curing time in the thermal cure step under consideration may be selected as appropriate as a function of the type of curing agent used and so forth. For example, when a cationic curing catalyst, infra, is used as the curing agent, i.e., when curing is carried out by a cationic curing reaction, a satisfactory curing reaction can be run even when short intervals are used for the curing time, and such a brief cure is suitable since this works to prevent the reaction of the condensable inorganic compound in the first step. It is also suitable because it can raise the production efficiency. Furthermore, a cationic curing catalyst provides a highly heat-resistant organic resin component since the curing reaction does not produce an alcohol or ester. For example, the curing time is preferably not more than 10 minutes, more preferably not more than 5 minutes, and even more preferably not more than 3 minutes. The curing time is preferably at least 10 seconds and more preferably at least 30 seconds. When a curing agent in ordinary use is employed, for example, an acid anhydride type, phenol type, or amine type, a curing time of 15 minutes to 48 hours is preferably used in order to bring about a satisfactory cure. 30 minutes to 36 hours is more preferred.

The thermal curing step under consideration may be run under reduced pressure or under an overpressure, in air and/or an inert gas atmosphere of, e.g., nitrogen. Moreover, the curing temperature may be changed in stages within the curing temperature range of 80 to 200°C. Viewed from the perspective of improving the productivity, for example, the curable resin composition may be held in a mold for a prescribed temperature and time and then demolded and subjected to a heat treatment by standing in the air and/or an inert gas atmosphere, e.g., nitrogen. This may be combined with curing by exposure to active-energy radiation.

When curing in the first step is brought about by exposure to active-energy radiation, the active-energy radiation should be able to produce an active species, for example, radicals, cations, and so forth. For example, microwaves, high-frequency waves, infrared radiation, laser light, and ionizing radiation such as ultraviolet radiation, visible light, an electron beam, $\alpha$-radiation, $\beta$-radiation, and $\gamma$-radiation are suitable, and a suitable selection should be made considering the absorption wavelength of the compound that generates the radical active species. Ultraviolet light and visible light at wavelengths of 180 to 500 nm are preferred among the preceding due to the ease of handling. Thus, in a preferred embodiment of the present invention, the aforementioned curing step based on exposure to active-energy radiation is a photocuring step in which curing is brought about by exposure to ultraviolet radiation or visible light at a wavelength of 180 to 500 nm. Within this wavelength range, light at a wavelength of 254 nm, 308 nm, 313 nm, and 365 nm is particularly effective for curing.

This curing step based on exposure to active-energy radiation may also be run under reduced pressure or under an overpressure, in air and/or in an inert gas.

The following are examples of suitable light sources for ultraviolet radiation and visible light at wavelengths of 180 to 500 nm: low-pressure mercury lamps, highpressure mercury lamps, ultrahigh-pressure mercury lamps, metal halide lamps, chemical lamps, blacklight lamps, mercury-xenon lamps, excimer lamps, short arc lamps, helium/cadmium lasers, argon lasers, excimer lasers, and sunlight.

The exposure time for this exposure to active-energy radiation, that is, the curing time in the active-energy radiation-based curing step, may be selected as appropriate as a function of the type of active-energy radiation, the exposure dose, and so forth. For example, the exposure time with ultraviolet radiation or visible light at a wavelength of 180 to 500 nm is preferably from 0.1 microsecond to 30 minutes and more preferably is from 0.1 millisecond to 1 minute.

As noted above, the first step includes a step of thermally curing the curable resin composition at 80 to 200°C and/or a step of curing the curable resin composition by exposure to active-energy radiation, wherein at least the step of thermally curing the curable resin composition at 80 to 200°C is preferably carried out. This enables the desired shape to be more easily obtained in the first step, makes it easier to also maintain this shape in the second step, and can more thoroughly prevent the foaming in the cured article caused by the gas that can be produced in the second step by the condensation of the condensable inorganic compound.

The first step is preferably a curing step that uses a pattern or form (known as a "mold") made of, e.g., metal, ceramic, glass, or resin. This mold-based curing step may be a curing step as is typically performed using a mold-based forming method, e.g., injection molding, compression molding, casting molding, sandwich molding, and so forth. The execution of the first step as such a mold-based curing step makes possible a more thorough manifestation of the functional effects of the present invention, i.e., the facile production of a discoloration-free and transparent cured molded article that exhibits various properties to an excellent degree, for example, abrasion resistance, low shrinkage, dimensional accuracy, and ability to replicate the mold. The first step is a mold-based curing step in a preferred embodiment of the present invention.

When the first step is a mold-based curing step, a demolding step is suitably carried out after the first step and prior to the second step. The execution of an embodiment that includes a demolding step, i.e., the execution of an embodiment in which the cured material provided by the first step is removed from the mold and the demolded cured material is then submitted to the second step, makes it possible to effectively turn around (recycle) the expensive mold and to extend the life of the mold, thereby making possible production of the cured molded article at a lower cost. An embodiment in which the previously described production process further includes a demolding step between the first step and the second step is also a preferred embodiment of the present invention.

In a procedure suitable for use in this case, the curable resin composition is executed as a single-package composition that contains the curing agent and any other optional components; this single-package composition is filled (injection, flooding, and so forth) into a mold that conforms to the shape of the desired cured molded article and is cured; and the cured material is thereafter removed from the mold.

In the production process referenced above, the cured material obtained in the first step (preferably the cured material removed from the mold in a demolding step) is submitted to the second step, and the pencil hardness of the cured material obtained in the first step is preferably at least 9B in order to stop foaming in the cured material in the second step. This hardness is more preferably at least 6B, even more preferably at least 2B, and particularly preferably at least F.

The pencil hardness can be measured based on JIS K5600-5-4 (established 1999) using a pencil scratch hardness tester (Yasuda Seiki Seisakusho Ltd.) and a load of 1000 g.

In the second step in the production process under consideration, the cured material obtained in the first step (preferably the cured material removed from the mold in a demolding step) is thermally cured at above 200°C to not more than 500°C. When the thermal cure temperature in the second step is not more than 200°C, the condensable inorganic compound does not undergo a satisfactory curing reaction and as a consequence a cured molded article that has the high surface hardness, i.e., the excellent abrasion resistance, required for outdoor-use applications may not be obtained. Exceeding 500°C can result in a lowered hardness and discoloration due to decomposition of the organic resin component. At least 250°C is preferred, at least 300°C is more preferred, at least 330°C is particularly preferred, and at least 350°C is most preferred. Not more than 400°C is also preferred.

The curing time in the second step should be a time that provides a satisfactory degree of cure for the resulting cured molded article, but is not otherwise particularly limited. Taking the production efficiency into consideration, for example, 30 minutes to 30 hours is preferred and 1 to 10 hours is more preferred.

The second step can be carried out in air and/or in an inert gas atmosphere such as nitrogen. In particular, the second step is preferably run in an atmosphere that has a low oxygen concentration, when viewed from the standpoint of effectively running the curing reaction of the condensable inorganic compound and obtaining additional improvements in the transparency and surface hardness (abrasion resistance). For example, the second step is preferably run in an inert gas atmosphere that has an oxygen concentration of not more than 10 volume%. Not more than 3 volume% is more preferred, not more than 1 volume% is even more preferred, not more than 0.5 volume% is particularly preferred, and not more than 0.3 volume% is most preferred. The curing temperature may be changed in stages within the curing temperature range of greater than 200°C to not more than 500°C.

The curable resin composition used in the above-described cured molded article production process is described herebelow.

This curable resin composition comprises a condensable inorganic compound, a curable organic compound, and a curing agent, and, with these being considered essential components, may also contain other components. A single one of each component may be used or two or more of each component may be used.

< The condensable inorganic compound >

The condensable inorganic compound in the curable resin composition denotes an inorganic compound that has a condensable group. This condensable group refers to a functional group that undergoes condensation under the effect of heating. This condensable inorganic compound is preferably a compound (a polymetalloxane compound) that has a condensable group and the metalloxane bond (M-O-M bond where M represents a metal element). Thus, in a preferred exemplary embodiment of the present invention, the condensable inorganic compound of the present invention is a polymetalloxane compound that bears a condensable group. Suitable specific examples of the condensable group are the M-O-R group (R represents a hydrocarbon group), the M-OH group, the M-X group (X represents a halogen atom), and the M-H group. The M-O-R group and the M-OH group are particularly suitable among these condensable groups from the standpoint of the curing reactivity.

There are no particular limitations on this metalloxane bond-containing compound, but it preferably includes a metalloxane bond-containing compound in which the metal element represented by M is a single selection or two or more selections from Si, Mg, Al, Ca, Ti, Mn, Fe, Co, Ni, Cu, Zn, Ga, Ge, Sr, Zr, Nb, Mo, Pd, Ag, Cd, In, Sn, Sb, Te, Ba, Ta, W, Ir, Tl, Pb, Bi, and Ra, more preferably a single selection or two or more selections from Si, Al, Ti, Zn, Zr, Sn, Ba, and Ra, even more preferably a single selection or two or more selections from Si, Ti, Zn, Zr, and Sn, and particularly preferably a single selection or two or more selections from Si and Sn. Most preferably, it includes a metalloxane bond-containing compound in which M is Si, i.e., a polysiloxane compound, from the perspective of compound stability and ease of compound production.

Thus, in a preferred exemplary embodiment of the present invention, the condensable inorganic compound of the present invention includes a condensable group-bearing polysiloxane compound.

The metalloid elements, e.g., Si, Ge, Sb, and so forth, are also included in the metal elements in this Specification.

When the aforementioned metalloxane bond-containing compound contains a polysiloxane compound, the content of the siloxane bond is preferably at least 30 mass% relative to the total amount of all the metalloxane bonds of 100 mass%, while at least 50 mass% is more preferred and at least 80 mass% is even more preferred. When the proportion of the siloxane bond in the metalloxane bond is too small, the metalloxane bond-containing compound has a fast hydrolysis rate and gelation or insolubilization becomes a strong possibility, which is very problematic for synthesis. In addition, the resin composition will also have a high viscosity, which is problematic for molding.

In the case of an embodiment in which the condensable inorganic compound includes a condensable group-bearing polysiloxane compound, an embodiment in which this condensable group is at least one group selected from the group consisting of a Si-O-R group (R represents a hydrocarbon group), a Si-OH group, a Si-X group (X represents a halogen atom), and a Si-H group is also a preferred embodiment of the present invention.

R in the M-O-R group represents a hydrocarbon group. R is preferably an alkyl group, aryl group, or aralkyl group, and the total M-O-R group population may contain two or more of these. R is preferably a $C_{1-20}$ hydrocarbon group. $C_{1-8}$ is more preferred and $C_{1-3}$ is even more preferred.

The alkyl group can be exemplified by chain alkyl groups such as methyl, ethyl, n-propyl, isopropyl, n-butyl, isobutyl, sec-butyl, t-butyl, pentyl, hexyl, 2-ethylhexyl, n-octyl, lauryl, stearyl, and so forth; cycloalkyl groups such as cyclopropyl, cyclobutyl, cyclohexyl, bicyclohexyl, and so forth; groups provided by replacing all or a portion of the hydrogen in a chain alkyl group with a cycloalkyl group; and groups provided by replacing all or a portion of the hydrogen in a cycloalkyl group with a chain alkyl group.

The aryl group can be exemplified by phenyl, naphthyl, and anthranyl and by groups provided by replacing all or a portion of the hydrogen in the preceding with, for example, alkyl (for example, methylphenyl (tolyl), dimethylphenyl (xylylene), diethylphenyl, and so forth).

The aralkyl group can be exemplified by benzyl and by groups provided by replacing all or a portion of the hydrogen in such groups with, for example, alkyl (for example, methylbenzyl and so forth).

Alkyl is preferred among the R groups cited above, i.e., an embodiment is preferred in which the RO group is an alkoxy group, and $C_{1-3}$ alkyl, e.g., methyl, ethyl, n-propyl, and isopropyl, is particularly preferred. This functions to make possible a further reduction in the shrinkage in the second step. Methyl and ethyl are more preferred, while ethyl is most preferred because this provides facile control of the reaction.

The R group may have a substituent. In addition, it may have a chain structure (straight chain, branched chain) or may have a cyclic structure.

There are no particular limitations on the halogen atom represented by X above, but a fluorine atom is particularly preferred.

There are no particular limitations on the molecular structure of the polymetalloxane compound, and its molecular structure can generally be exemplified by chain structures (straight chain, branched), ladder structures, cyclic structures, cage forms, and particulate forms. Chain, ladder, and cage forms are preferred among the preceding from the standpoint of obtaining a high solubility in the resin component, e.g., the curable organic compound. In addition, viewed from the perspectives of obtaining a high solubility in the curable organic compound (compatibility with the curable organic compound) and obtaining a cured molded article having a higher optical transparency and better mechanical properties, chain and ladder forms are more preferred and ladder forms are particularly preferred. When, in particular, a polymetalloxane ladder compound is used, and as compared to the use of a polymetalloxane compound having another structure, an even better mold release performance can be obtained, an even better ability to control the optical properties (transparency, Abbe number, refractive index, and so forth) can be obtained, and even better mechanical properties can be obtained, at a small quantity of addition. Thus, the following effects, inter alia, can be manifested due to its addition: (1) facile release of the cured molded article from the mold after curing (excellent mold release performance); (2) the ability to closely control the transparency, Abbe number, and refractive index of the curable resin composition (excellent controllability); (3) the ability to closely control the transparency, Abbe number, and refractive index of the cured molded article (excellent controllability); and (4) excellent mechanical properties for the cured molded article (high elastic modulus, high breaking strength).

The polymetalloxane compound may be a liquid or solid at normal temperature.

The weight-average molecular weight of the polymetalloxane compound is preferably at least 300 and is preferably not more than 100,000. At less than 300, a resin composition that contains the polymetalloxane compound does not take on an enhanced storage stability, and there may be no additional enhancement in the mold release behavior (mold release performance), the ability to control the optical properties, and the mechanical properties. At above 100,000, the compatibility with the resin component, e.g., the curable organic compound and so forth, may not be enhanced. At least 500 is more preferred and at least 1,000 is even more preferred. Not more than 50,000 is more preferred and not more than 10,000 is even more preferred.

The weight-average molecular weight in this Specification was measured using the method described below.

(Method for measuring the weight-average molecular weight)
The weight-average molecular weight was measured on the resin composition and the resin during synthesis using measurement by gel permeation chromatography (GPC).
(Measurement instrumentation)
A gel permeation chromatograph (product name: "HLC-8320GPC" from the Tosoh Corporation) was used.
(Measurement conditions)

column: "TSKgel SuperMultipore HZ-N" $\times$ 2, from the Tosoh Corporation
eluent: tetrahydrofuran (THF)
flow rate: 0.35 mL/minute
temperature: 40°C
working curve: constructed using polystyrene standard samples (Tosoh Corporation)

A compound represented by the following average compositional formula (1) is particularly preferred for the polymetalloxane compound under consideration.

$$R^1_x Y_y MO_z \qquad (1)$$

(M represents a metal element. $R^1$ represents an alkyl group, aryl group, aralkyl group, a group having an oxirane ring, a group having an acrylic and/or methacrylic group, a group containing the S (sulfur) atom, or a functional group containing the F (fluorine) atom. Y represents a condensation group or condensation atom and forms a condensable group as described above by bonding to M. x, y, and z respectively represent the average values of the bonding proportions of $R^1$, Y, and O with respect to M and satisfy $0 \leq x \leq n-1$, $0 < y \leq n$, and $0 \leq z \leq n/2$. n represents the atomic valence of the metal element M (the average value of the atomic valences of the individual elements when M encompasses two or more metal elements).) More preferred ranges for x, y, and z are $0 \leq x \leq n-2$, $0 < y \leq n-2$, and $(n-2)/2 \leq z < n/2$.

In an embodiment in which the aforementioned polymetalloxane compound includes a polysiloxane compound, this polysiloxane compound is particularly preferably a compound that contains a condensable group in the molecule and that contains mainly structural units having a silicon atom bonded to three silicon atoms by the siloxane bond (Si-O-Si bonds), e.g., silsesquioxane units (this compound is also called a "condensable group-bearing silsesquioxane" or simply a "silsesquioxane" or a "polysilsesquioxane"). This polysiloxane compound is, for example, particularly preferably a compound represented by the following average compositional formula (2).

$$R^1{}_x Y_y SiO_z \qquad (2)$$

($R^1$ represents an alkyl group, aryl group, aralkyl group, a group having an oxirane ring, a group having an acrylic and/or methacrylic group, a group containing the S (sulfur) atom, or a functional group containing the F (fluorine) atom. Y represents a condensation group or condensation atom and forms a condensable group as described above by bonding to Si. x, y, and z respectively represent the average values of the bonding proportions of $R^1$, Y, and O with respect to Si and satisfy $0 < x < 2$, $0 < y < 2$, $1 < z < 2$, $0 < (x + y) < 2$, and $x + y + 2z = 4$.) The use of such a silsesquioxane serves to enhance/improve the heat resistance and mechanical properties and to inhibit the timewise rise in the viscosity of the resin composition. Accordingly, the curable resin composition can then be executed as a single-package resin composition (a single-package curable resin composition) with better handling characteristics and, in combination with the functional effects due to the production process of the present invention, a cured molded article having excellent properties can be obtained in an efficient and convenient manner.

$R^1$ in average compositional formula (2) represents an alkyl group, aryl group, aralkyl group, a group having an oxirane ring, a group having an acrylic and/or methacrylic group, a group containing the S (sulfur) atom, or a functional group containing the F (fluorine) atom, and these groups preferably contain from 1 to 20 carbons. 1 to 8 is more preferred and 1 to 3 is even more preferred. $R^1$ is preferably an alkyl group, aryl group, or aralkyl group. Alkyl is preferred thereamong and can be exemplified by chain alkyl groups such as methyl, ethyl, n-propyl, isopropyl, n-butyl, isobutyl, sec-butyl, t-butyl, pentyl, hexyl, 2-ethylhexyl, n-octyl, lauryl, stearyl, and so forth; cycloalkyl groups such as cyclopropyl, cyclobutyl, cyclohexyl, bicyclohexyl, and so forth; groups provided by replacing all or a portion of the hydrogen in a chain alkyl group with a cycloalkyl group; and groups provided by replacing all or a portion of the hydrogen in a cycloalkyl group with a chain alkyl group. $C_{1-3}$ alkyl, e.g., methyl, ethyl, n-propyl, and isopropyl, is preferred among the preceding because this can provide a further increase in the surface hardness. The methyl group is more preferred. In addition, aralkyl is preferred for raising the refractive index, and phenyl is particularly preferred.

$R^1$ may have a substituent, but particularly preferably is a substituent-free group.

In this Specification, "alkyl group" refers not simply to straight-chain alkyl groups and branched-chain alkyl groups, but also encompasses cyclic alkyl groups (cycloalkyl groups).

In place of the $R^1$ described above, the polysiloxane compound under consideration may have a group that forms a bond with an organic resin component (for example, a curable organic compound). For example, a curable organic compound may be used in place of $R^1$ in the average compositional formula (2). However, such a compound is preferably not used based on a consideration of the stability of the organic resin component.

The Y referenced above represents a condensation group or condensation atom and forms a condensable group upon bonding to the Si. Thus, Y is preferably at least one type selected from the group consisting of OR groups (R represents a hydrocarbon group), the hydroxyl group, halogen atoms (X), and the hydrogen atom. Suitable embodiments of R and X have already been described above.

x, y, and z in the average compositional formula (2) satisfy $0 < x < 2$, $0 < y < 2$, $1 < z < 2$, $0 < (x + y) < 2$, and $x + y + 2z = 4$.

This y represents the average value of the bonding proportion for Y relative to Si and is a number greater than 0 and less than 2. When Y is 2 or more, bubbles may be produced in the molded article due to the condensation Y. The value of y is preferably less than 1, more preferably less than 0.5, and particularly preferably less than 0.3. The value of Y is also preferably larger than 0.001. At less than 0.001, the increase in hardness due to the condensation of the silsesquioxane in the second step is small and the compatibility with epoxy resins is also weak. A value larger than 0.01 is more preferred, a value larger than 0.05 is even more preferred, and a value larger than 0.08 is particularly preferred.

The aforementioned z should be a number greater than 1 and less than 2. Larger than 1.2 and less than 1.8 is preferred, while larger than 1.35 and less than 1.65 is more preferred.

The aforementioned x + y should be a number larger than 0 and less than 2. Larger than 0.4 and less than 1.6 is preferred and larger than 0.7 and smaller than 1.3 is more preferred.

This x, y, and x + y are preferably established as appropriate so as to satisfy the preferred ranges indicated above.

The content of the condensable inorganic compound under consideration in the curable resin composition is preferably from 5 to 95 mass% relative to the total mass of the condensable inorganic compound and the curable organic compound of 100 mass%. A higher content for the condensable inorganic compound results in a higher heat resistance, i.e., a greater resistance to discoloration, and also in a higher hardness, and is therefore preferred. However, when the content of the condensable inorganic compound is too high, i.e., more than 95 mass%, a better organic resin matrix (cured material) can then not be formed in the first step and a better ability to replicate the mold is not obtained, and this may prevent the resulting cured molded article from being a cured molded article that is particularly useful for applications such as optical elements and members. Letting 100 mass% be the total mass of the condensable inorganic compound and the curable organic compound, the content of the condensable inorganic compound is more preferably at least 10 mass%, even more preferably at least 30 mass%, particularly preferably at least 50 mass%, and most preferably at least 60 mass%. In addition, it is preferably not more than 90 mass% and more preferably is not more than 80 mass%.

The content in the cured molded article of the metal element constituting the metalloxane component in the condensable inorganic compound, expressed as the metal element content in the ultimately obtained molded article taken to be 100 mass%, is preferably at least 5 mass%. At least 10 mass% is more preferred, at least 15 mass% is even more preferred, and at least 20 mass% is particularly preferred.

In addition, in an embodiment in which the condensable inorganic compound includes a polysiloxane compound, the content of the siloxane bond in the cured molded article, expressed as the Si content in the ultimately obtained molded article taken to be 100 mass%, is preferably at least 5 mass%. At least 10 mass% is more preferred, at least 15 mass% is even more preferred, and at least 20 mass% is particularly preferred.

From the standpoint of controlling the optical properties, the condensable inorganic compound (preferably a polysilsesquioxane) may contain another metal or inorganic element as a constituent component. This metal element can be exemplified by alkaline-earth metal elements such as Be, Mg, Ca, Sr, Ba, and Ra; lanthanoid metal elements such as La and Ce; actinoid metal elements such as Ac; Group IIIa metal elements such as Sc and Y; Group IVa metal elements such as Ti, Zr, and Hf; Group Va metal elements such as V, Nb, and Ta; Group VIa metal elements such as Cr, Mo, and W; Group VIIa metal elements such as Mn, Tc, and Re; Group VIII metal elements such as Fe, Co, Ni, Ru, Rh, Pd, Os, Ir, and Pt; Group Ib metal elements such as Cu, Ag, and Au; Group IIb metal elements such as Zn, Cd, and Hg; Group IIIb metal elements such as Al, Ga, In, and Tl; Group IVb metal elements such as Ge, Sn, and Pb; Group Vb metal elements such as Sb and Bi; and Group VIb metal elements such as Se and Te. A single one of these may also be present or two or more of these may also be present. These can be selected as appropriate as a function of, for example, the electrical properties, optical properties, and/or magnetic properties desired for the composition. For example, Ti, Zr, In, Zn, La, Al, and Sn are preferred when, with reference to the optical properties, a high refractive index is desired for the resin composition.

< The curable organic compound >

The curable organic compound in the aforementioned curable resin composition denotes an organic compound that has a curable functional group. This curable organic group refers to a functional group that undergoes a curing reaction under the effect of heat or light (a group that brings about the curing reaction of the resin composition). The curable functional group can be exemplified by a ring-opening polymerizable group, e.g., the epoxy group, oxetane ring, ethylene sulfide group, and so forth, and by radical-curable groups and/or addition-curable groups, e.g., the acrylic group, methacrylic group, vinyl group, and so forth. The curable organic compound is preferably a compound that has a ring-opening polymerizable group that undergoes curing by a cationic cure (e.g., the epoxy group, oxetane group, ethylene sulfide group), or a compound that has the acrylic group and/or methacrylic group, which cure by a radical cure, or a vinyl group that cures by an addition reaction, e.g., hydrosilylation, an ene-thiol reaction, and so forth. When these compounds are used, only a short time is required up to and including the primary cure (the cure in the first step) and the productivity is thus excellent; moreover, the resulting cured material has an excellent heat resistance (resistance to thermal decomposition, resistance to thermal discoloration). Viewed from the perspective of facilitating reproduction of the shape of the mold due to a low shrinkage ratio during the primary cure, a compound that has a ring-opening polymerizable group (a ring-opening polymerizable group-bearing compound)that undergoes curing by a cationic cure is more preferred among the preceding compounds. While it is sufficient for the ring-opening polymerizable group-bearing compound to be compound that has at least one ring-opening polymerizable group in each molecule, it is suitable to require that this compound be a compound that has a total of at least two ring-opening polymerizable groups, namely a multifunctional compound. This results in a further increase in the cure reactivity and provides a resin composition that has an excellent curability and an excellent cure rate, as a consequence of which the cured molded article can be obtained in even less time. Such an embodiment that requires the ring-opening polymerizable group-bearing compound to be a multifunctional compound is therefore a preferred embodiment of the present invention. This is more preferably an embodiment in which, letting 100 mass% be the total mass of the ring-opening polymerizable group-bearing compound, the multifunctional compound is at least 50 mass% and more preferably is at least 80 mass% and most preferably is 100 mass%, i.e., only multifunctional compound is used for the ring-opening polymerizable group-bearing compound. The ring-opening polymerizable group is preferably the epoxy group, oxetane ring, and so forth. That is, the aforementioned ring-opening polymerizable group-bearing compound is preferably a compound that bears the epoxy group and/or the oxetane ring. Among such compounds, an embodiment in which the aforementioned ring-opening polymerizable group-bearing compound is a multifunctional compound and the ring-opening polymerizable group is the epoxy group and/or oxetane ring is a particularly preferred embodiment of the present invention. The epoxy group includes the oxirane ring, which is three-member cyclic ether, and also encompasses, in addition to the epoxy group in a narrow sense, the glycidyl group (including the glycidyl ether group and glycidyl ester group).

Among the aforementioned compounds that have a ring-opening polymerizable group, aromatic epoxy compounds, aliphatic epoxy compounds, alicyclic epoxy compounds, and hydrogenated epoxy compounds are suitable as compounds that contain at least the epoxy group (epoxy compounds).

The aforementioned aromatic epoxy compounds are compounds that have an aromatic ring and the epoxy group in the molecule, and, for example, glycidyl compounds having a conjugated aromatic ring system, e.g., a bisphenol skeleton, fluorene skeleton, biphenyl skeleton, naphthalene ring, anthracene ring, and so forth, are preferred. Among these, compounds having a bisphenol skeleton and/or fluorene skeleton are preferred for generating a higher refractive index. Compounds with a fluorene skeleton are more preferred because they can provide an even more significant increase in the refractive index and can also provide a further increase in the mold release performance. Aromatic glycidyl ether compounds are also preferred. In addition, the use of a brominated compound from an aromatic epoxy compound is preferred because this can achieve a higher refractive index; however, since the Abbe number is also increased to some degree, such a compound is preferably used as appropriate in conformity with the particular application.

Suitable examples of the aromatic epoxy compounds are bisphenol A-type epoxy compounds, bisphenol F-type epoxy compounds, fluorene-type epoxy compounds, and aromatic epoxy compounds that have a bromine substituent, whereamong bisphenol A-type epoxy compounds and fluorene-type epoxy compounds are preferred. Specifically, the use is preferred of bisphenol A-type epoxy compounds (828EL, 1003, and 1007 from Japan Epoxy Resin Co., Ltd.), bisphenol F-type epoxy compounds, fluorene-type epoxy compounds (ONCOAT EX-1020 and OGSOL EG-210 from Osaka Gas Chemicals Co., Ltd.), and fluorene-type epoxy compounds (ONCOAT EX-1010 and OGSOL PG from Osaka Gas Chemicals Co., Ltd.). Bisphenol A-type epoxy compounds and fluorene-type epoxy compounds (OGSOL EG-210 from Osaka Gas Chemicals Co., Ltd.) are more preferred.

Aromatic glycidyl ether compounds are also suitably used for the aforementioned aromatic epoxy compound, and the aromatic glycidyl ether compounds can be exemplified by epibis-type glycidyl ether epoxy resins, high molecular weight epibis-type glycidyl ether epoxy resins, and novolac/aralkyl-type glycidyl ether epoxy resins.

The aforementioned epibis-type glycidyl ether epoxy resins are preferably the epibis-type glycidyl ether epoxy resins obtained by a condensation reaction between an epihalohydrin and a bisphenol such as bisphenol A, bisphenol F, bisphenol S, and fluorene bisphenol.

The aforementioned high molecular weight epibis-type glycidyl ether epoxy resins are preferably the high molecular weight epibis-type glycidyl ether epoxy resins obtained by subjecting the aforementioned epibis-type glycidyl ether epoxy resins to a further addition reaction with a bisphenol such as bisphenol A, bisphenol F, bisphenol S, or fluorene bisphenol.

The novolac/aralkyl-type glycidyl ether epoxy resins can be exemplified by the novolac/aralkyl-type glycidyl ether epoxy resins obtained by preparing a polyhydric phenol by carried out a condensation reaction between a phenol, e.g., phenol, cresol, xylenol, naphthol, resorcinol, catechol, bisphenol A, bisphenol F, bisphenol S, fluorene bisphenol, and so forth, and, e.g., formaldehyde, acetaldehyde, propionaldehyde, benzaldehyde, hydroxybenzaldehyde, salicylaldehyde, dicyclopentadiene, terpene, coumarin, para-xylylene glycol dimethyl ether, dichloro-para-xylylene, bishydroxymethylbiphenyl, and so forth, and subjecting the resulting polyhydric phenol to a further condensation reaction with an epihalohydrin.

The following, for example, can also be used for the aromatic epoxy compound: aromatic crystalline epoxy resins obtained by a condensation reaction between an epihalohydrin and, for example, tetramethylbiphenol, tetramethylbisphenol F, hydroquinone, or naphthalenediol; the high molecular weight forms of aromatic crystalline epoxy resins as obtained by a further addition reaction with, for example, the aforementioned bisphenols, tetramethylbiphenol, tetramethylbisphenol F, hydroquinone, or naphthalenediol; and the glycidyl ester-type epoxy resins obtained by a condensation reaction between an epihalohydrin and tetrahydrophthalic acid, hexahydrophthalic acid, or benzoin acid.

The aforementioned aliphatic epoxy compound refers to a compound that has an aliphatic epoxy group, wherein aliphatic glycidyl ether-type epoxy resins are preferred.

These aliphatic glycidyl ether-type epoxy resins can be exemplified by the aliphatic glycidyl ether-type epoxy resins provided by a condensation reaction between an epihalohydrin and a compound such as ethylene glycol, diethylene glycol, triethylene glycol, tetraethylene glycol, polyethylene glycol (PEG600), propylene glycol, dipropylene glycol, tripropylene glycol, tetrapropylene glycol, polypropylene glycol (PPG), glycerol, diglycerol, tetraglycerol, polyglycerol, trimethylolpropane and its multimers, pentaerythritol and its multimers, and a monosaccharide or polysaccharide such as glucose, fructose, lactose, or maltose; and can also be exemplified by aliphatic glycidyl ether-type epoxy resins having a propylene glycol skeleton, alkylene skeleton, or oxyalkylene skeleton. Preferred among the preceding are aliphatic glycidyl ether-type epoxy resins that have a propylene glycol skeleton, alkylene skeleton, or oxyalkylene skeleton for the main skeleton.

The alicyclic epoxy compound is a compound that has an alicyclic epoxy group, and the alicyclic epoxy group can be exemplified by the epoxycyclohexane group (epoxycyclohexane skeleton) and epoxy groups that are added, directly or across a hydrocarbon, to a cyclic aliphatic hydrocarbon. Compounds having the epoxycyclohexane group are preferred among the preceding. From the standpoint of making possible a higher cure rate, a multifunctional alicyclic epoxy compound having two or more alicyclic epoxy groups in the molecule is preferred. Also preferred for use is a compound having one alicyclic epoxy group and an unsaturated double bond group, e.g., the vinyl group, in the molecule.

Suitable examples of epoxycyclohexane group-containing epoxy compounds are 3,4-epoxycyclohexylmethyl 3',4'-epoxycyclohexanecarboxylate, epsilon-caprolactone-modified 3,4-epoxycyclohexylmethyl 3',4'-epoxycyclohexanecarboxylate, bis(3,4-epoxycyclohexyl) adipate, and so forth. Alicyclic epoxy compounds other than epoxycyclohexane group-containing epoxy compounds can be exemplified by alicyclic epoxides such as 1,2-epoxy-4-(2-oxiranyl)cyclohexane adduct on 2,2-bis(hydroxymethyl)-1-butanol and heterocycle-containing epoxy resins such as triglycidyl isocyanurate.

The aforementioned hydrogenated epoxy compound is preferably a compound that has a glycidyl ether group bonded directly or indirectly to a saturated aliphatic cyclic hydrocarbon skeleton, and is preferably a multifunctional glycidyl ether compound. Such a hydrogenated epoxy compound is preferably the complete or partial hydrogenate of an aromatic epoxy compound, more preferably the hydrogenate of an aromatic glycidyl ether compound, and even more preferably the hydrogenate of an aromatic multifunctional glycidyl ether compound. Specifically, hydrogenated bisphenol A-type epoxy compounds, hydrogenated bisphenol S-type epoxy compounds, hydrogenated bisphenol F-type epoxy compounds, and so forth, are preferred. Hydrogenated bisphenol A-type epoxy compounds and hydrogenated bisphenol F-type epoxy compounds are more preferred.

Also usable as the aforementioned epoxy compound are the tertiary-amine-containing glycidyl ether-type epoxy resins that are solid at room temperature and are obtained by a condensation reaction between an epihalohydrin and hydantoin, cyanuric acid, melamine, or benzoguanamine.

Alicyclic epoxy compounds and hydrogenated epoxy compounds are particularly suitable among the epoxy compounds described in the preceding. These act to inhibit discoloration of the epoxy compound itself during curing and photoinduced discoloration and deterioration. Thus, because they also provide an excellent transparency, discoloration resistance, and light resistance, resin compositions that contain them can yield a discoloration-free, highly light-resistant cured molded article at high productivity levels. In addition, these epoxy compounds, because they provide an even better mold release performance and curability when used in combination with cationic curing catalysts, are also preferred from the standpoint of making possible an increase in the cure rate. Thus, an embodiment in which the aforementioned ring-opening polymerizable group-bearing compound is an alicyclic epoxy compound and/or a hydrogenated epoxy compound is a preferred embodiment of the present invention. In a more preferred embodiment, the aforementioned ring-opening polymerizable group-bearing compound includes a multifunctional alicyclic epoxy compound and/or a multifunctional hydrogenated epoxy compound.

With regard to the content of the alicyclic epoxy compound and hydrogenated epoxy compound in the case of an embodiment in which the ring-opening polymerizable group-bearing compound includes an alicyclic epoxy compound and/or a hydrogenated epoxy compound, their total mass is suitably at least 10 mass% relative to the total mass of the ring-opening polymerizable group-bearing compound of 100 mass%. This makes possible a higher manifestation of the functional effects due to the use of the alicyclic epoxy compound and/or hydrogenated epoxy compound. In another preferred embodiment of the present invention, the ring-opening polymerizable group-bearing compound includes an alicyclic epoxy compound and/or a hydrogenated epoxy compound and the total mass of the alicyclic epoxy compound and hydrogenated epoxy compound is at least 10 mass% relative to the total mass of the ring-opening polymerizable group-bearing compound of 100 mass%. At least 50 mass% is more preferred, at least 70 mass% is even more preferred, and at least 90 mass% is particularly preferred. It is particularly preferred among the preceding that the ring-opening polymerizable group-bearing compound contains a multifunctional alicyclic epoxy compound and/or a multifunctional hydrogenated epoxy compound and that the total mass of the multifunctional alicyclic epoxy compound and the multifunctional hydrogenated epoxy compound be at least 10 mass% relative to the total mass of the ring-opening polymerizable group-bearing compound of 100 mass%, wherein at least 50 mass% is more preferred, at least 70 mass% is even more preferred, and at least 90 mass% is particularly preferred.

Among the ring-opening polymerizable group-bearing compounds described above, the co-use of an oxetane ring-containing compound (oxetane compound) with an alicyclic epoxy compound and/or a hydrogenated epoxy compound is preferred from the cure rate perspective. Moreover, viewed from the perspective of raising the refractive index while maintaining the cure rate, the use is preferred of an oxetane compound that has an aryl group or aromatic ring in the molecule. On the other hand, the use of an oxetane compound that does not contain an aryl group or aromatic ring is preferred from the standpoint of increasing the resistance to light. Viewed from the perspective of raising the strength of the cured material, a multifunctional oxetane compound, i.e., a compound having two or more oxetane rings in the molecule, is suitably used.

Among the aforementioned oxetane compounds that do not contain an aryl group or an aromatic ring, preferred monofunctional oxetane compounds are, for example, 3-methyl-3-hydroxymethyloxetane, 3-ethyl-3-hydroxymethyloxetane, 3-ethyl-3-(2-ethylhexyloxymethyl)oxetane, isobutoxymethyl(3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, and ethyl diethylene glycol (3-ethyl-3-oxetanylmethyl) ether.

Among the aforementioned oxetane compounds that contain an aryl group or an aromatic ring, preferred monofunctional oxetane compounds are, for example, 3-methyl-3-(phenoxymethyl)oxetane, 3-ethyl-3-(phenoxymethyl) oxetane, dicyclopentadiene (3-ethyl-3-oxetanylmethyl) ether, dicyclopentenyloxyethyl (3-ethyl-3-oxetanylmethyl) ether, and dicyclopentenyl (3-ethyl-3-oxetanylmethyl) ether.

Among the aforementioned oxetane compounds that do not contain an aryl group or an aromatic ring, preferred multifunctional oxetane compounds are, for example, di[1-ethyl(3-oxetanyl)]methyl ether, 3,7-bis(3-oxetanyl)-5-oxa-nonane, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl) ether, tricyclodecanediyldimethylene (3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, and dipentaerythritol tetrakis(3-ethyl-3-oxetanylmethyl) ether.

Among the aforementioned oxetane compounds that contain an aryl group or aromatic ring, preferred multifunctional oxetane compounds are, for example, phenol novolac oxetane, dioxetane compounds that have a biphenyl skeleton (ETERNACOLL(R) OXBP, from Ube Industries, Ltd.), dioxetane compounds that have a phenyl skeleton (ETERNACOLL(R) OXTP, from Ube Industries, Ltd.), and dioxetane compounds that have a fluorene skeleton.

Viewed from the perspective of lowering the shrinkage, the content of the ring-opening polymerizable group-bearing compound is preferably at least 50 mass% relative to the total mass of the previously described curable organic compound of 100 mass%. At least 80 mass% is more preferred, and 100 mass% is most preferred, i.e., it is most preferred for the curable organic compound to be only a ring-opening polymerizable group-bearing compound.

Among the aforementioned curable organic compounds, the use is preferred of the following for compounds that have one or two or more selections from the acrylic group, methacrylic group, and vinyl group: aromatic vinyl monomers such as styrene, α-methylstyrene, α-chlorostyrene, vinyltoluene, divinylbenzene, diallyl phthalate, and diallylbenzenephosphonate; vinyl ester monomers such as vinyl acetate and vinyl adipate; (meth)acrylate-type monomers such as methyl (meth)acrylate, ethyl (meth)acrylate, butyl (meth)acrylate, β-hydroxyethyl (meth)acrylate, (2-oxo-1,3-dioxolan-4-yl)methyl (meth)acrylate, (di)ethylene glycol di(meth)acrylate, propylene glycol di(meth)acrylate, trimethylolpropane di(meth)acrylate, trimethylolpropane tri(meth)acrylate, pentaerythritol tetra(meth)acrylate, dipentaerythritol hexa(meth)acrylate, admantyl (meth)acrylate, fluorene (meth)acrylate, and tris[2-(meth)acryloyloxyethyl]triazine; vinyl (thio) ether compounds that have a radical polymerizable double bond, such as 2-(vinyloxyethoxy)ethyl (meth)acrylate, 2-(isopropenoxyethoxyethoxy)ethyl (meth)acrylate, 2-(isopropenoxyethoxyethoxyethoxy)ethyl (meth)acrylate, and 2-(isopropenoxyethoxyethoxyethoxyethoxy)ethyl (meth)acrylate; and triallyl cyanurate. Dipentaerythritol hexa(meth)acrylate, adamantyl (meth)acrylate, and fluorene (meth)acrylate are more preferred.

View from the perspective of improving the ageing resistance, the content of the compound having one or two or more selections from the acrylic group, methacrylic group, and vinyl group is preferably at least 50 mass% relative to the total mass of the curable organic compound of 100 mass%. At least 80 mass% is more preferred and 100 mass% is most preferred, i.e., the curable organic compound is composed of only a compound having one or two or more selections from the acrylic group, methacrylic group, and vinyl group.

The curable organic compound preferably does not contain a metal element. Specifically, the curable functional group present in a metal element-free curable organic compound is preferably at least 1 mol% relative to the total amount of curable functional groups of 100 mol%. At least 10 mol% is more preferred, at least 30 mol% is even more preferred, and at least 50 mol% is still more preferred. At least 70 mol% is particularly preferred and at least 90 mol% is most preferred. When too much of the curable functional group is present in a metal element-containing curable organic compound (particularly when too much curable functional group is bonded to a metal element), a large shrinkage ratio occurs during the primary cure and fissuring of the cured material is prone to occur in the secondary cure (during curing in the second step).

Viewed from the perspective of obtaining a highly heat-resistant molded article having a low cure shrinkage ratio, preferably at least 50 mol% of the total amount of curable functional groups of 100 mol% is an oxirane ring-containing functional group. At least 60 mol% is more preferred and at least 80 mol% is even more preferred. 100 mol% is most preferred, i.e., all of the curable functional groups are oxirane ring-containing functional groups.

< The curing agent >

The curing agent in the curable resin composition should be selected as appropriate in conformity to the curing reaction in the first step. For example, when a thermal cure is carried out in the first step, in addition to a thermolatent cationic curing catalyst, those curing agents in ordinary use can be used, e.g., a thermolatent radical curing catalyst, an acid anhydride type, a phenol type, or an amine type. The use is preferred thereamong of thermolatent cationic curing catalysts and thermolatent radical curing catalysts. The use of a thermolatent cationic curing catalyst is particularly preferred for the purpose of lowering the amount of shrinkage by the cured material. When curing is performed by exposure to active-energy radiation, a photopolymerization initiator can be used as the curing agent, and photolatent cationic curing catalysts and photolatent radical curing catalysts are preferably used. The use of a photolatent cationic curing catalyst is particularly preferred for the purpose of lowering the amount of shrinkage by the cured material. A single one of these curing agents may be used or two or more may be used in combination.

Thus, a cationic curing catalyst, e.g., a thermolatent cationic curing catalyst or photolatent cationic curing catalyst, is preferably used in the present invention. By doing this, the curing reaction in the first step can proceed to a suitable degree in a short period of time and the matrix (cured material) can be rapidly formed, which as a consequence can improve the production efficiency and can thoroughly inhibit the development of the curing reaction of the condensable inorganic compound in the first step. Moreover, in addition to yielding a highly heat-resistant cured molded article with an excellent mold release performance, the curable composition can provide a stable, good handling single-package composition (single-package configuration). Thus, the use of a cationic curing catalyst makes possible a more thorough manifestation of the functional effects of the present invention, coupled with the functional effects due to the production process of the present invention. An embodiment in which the curing agent contains a thermolatent cationic curing catalyst and/or a photolatent cationic curing catalyst is also a preferred embodiment of the present invention. The use of at least a thermolatent cationic curing catalyst is particularly preferred when the resin composition is used for optical element applications.

The thermolatent cationic curing catalyst is also known as a thermal acid generator, thermolatent curing agent, thermolatent cation generator, and cationic polymerization initiator and substantially exhibits the function of a curing agent in the resin composition when at the curing temperature. When a thermolatent cationic curing catalyst is used, the compound containing the cationic species is excited by the application of heat, a thermal decomposition reaction occurs, and the thermal cure advances. However, unlike the acid anhydrides, amines, and phenol resins typically used as curing agents, a thermolatent cationic curing catalyst, when incorporated in a resin composition, does not induce gelation or a timewise increase in the viscosity of the resin composition at normal temperatures. A thermolatent cationic curing catalyst also functions to thoroughly promote the cure reaction and can manifest excellent effects and can provide a single-package resin composition (single-package material) with even better handling properties.

Moreover, by using a thermolatent cationic curing catalyst, the moisture resistance of the cured molded article obtained from the resulting resin composition is substantially improved and the excellent optical properties possessed by the resin composition are maintained even in a severe use environment, making possible an even better adapted use in various applications. Generally, the presence of moisture, which has a low refractive index, in a resin composition or cured material therefrom is a cause of hazing; however, since an excellent moisture resistance can be obtained when a thermolatent cationic curing catalyst is used, this hazing is inhibited, making possible a well-adapted use in optical applications, e.g., lenses. For applications such as vehicle-mounted cameras and barcode readers for delivery personnel, the yellowing and strength deterioration caused by exposure to high temperatures during the summer and long-term exposure to ultraviolet radiation are a particular concern, and it is believed that these phenomena are caused by a synergistic effect between air and/or moisture and exposure to ultraviolet radiation or heat. By improving the moisture resistance, moisture absorption into the resin composition is inhibited and the production of oxygen radicals by the synergism with exposure to ultraviolet radiation or heat is also restrained, and this makes possible the manifestation of an excellent long-term heat resistance without the occurrence of yellowing by the resin composition or a deterioration in strength. Thus, by using a thermolatent cationic curing catalyst, the effects of the present invention brought about by carrying out a two-stage curing process, i.e., the previously described first step and second step, are synergistically manifested and a cured molded article having excellent properties can then be more readily obtained.

For example, a compound represented by the following general formula (4) is suitable for use as the thermolatent cationic curing catalyst.

$$(R^1{}_aR^2{}_bR^1{}_cR^4{}_dZ)^{+m}(AXn)^{-m} \qquad (4)$$

(In the formula, Z represents at least one element selected from the group consisting of S, Se, Te, P, As, Sb, Bi, O, N, and the halogen elements. $R^1$, $R^2$, $R^3$, and $R^4$ each independently represent an organic group. a, b, c, and d are 0 or a positive number, and the sum of a, b, c, and d is equal to the valence of Z. The $(R^1_a R^2_b R^3_c R^4_d Z)^{+m}$ cation represents an onium salt. A represents a metal element or metalloid element that is the central atom in the complex halide and is at least one type selected from the group consisting of B, P, As, Al, Ca, In, Ti, Zn, Sc, V, Cr, Mn, and Co. X represents a halogen element. m is the net charge on the complex halide ion. n is the number of halogen elements in the complex halide ion.)

The $(AXn)^{-m}$ anion in general formula (4) can be specifically exemplified by tetrafluoroborate ($BF^{4-}$), hexafluorophosphate ($PF^{6-}$), hexafluoroantimonate ($SbF^{6-}$), hexafluoroarsenate ($AsF^{6-}$), hexachloroantimonate ($SbCl^{6-}$), and so forth.

An anion with the general formula $AXn(OH)^-$ can also be used. This additional type of anion can be exemplified by the perchlorate ion ($ClO_4^-$), trifluoromethylsulfite ion ($CF_3SO_3^-$), fluorosulfonate ion ($FSO_3^-$), toluenesulfonate ion, trinitrobenzenesulfonate ion, and so forth.

Specific examples of product names for these thermolatent cationic curing catalysts are as follows: diazonium salt types such as the AMERICURE series (from the American Can Company), the ULTRASET series (from the ADEKA Corporation), the WPAG series (from Wako Pure Chemical Industries, Ltd.), and so forth; iodonium salt types such as the UVE series (from the General Electric Corporation), the FC series (from 3M), the UV9310C (from GE Toshiba Silicone Co., Ltd.), Photoinitiator 2074 (from Rhone-Poulenc (now Rhodia)), the WPI series (from Wako Pure Chemical Industries, Ltd.), and so forth; and sulfonium salt types such as the CYRACURE series (from Union Carbide), the UVI series (from the General Electric Corporation), the FC series (from 3M), the CD series (from the Sartomer Company Incorporated), the Optomer SP series/Optomer CP series (from the ADEKA Corporation), the San-Aid SI series (from Sanshin Chemical Industry, Ltd.), the CI series (from Nippon Soda Co., Ltd.), the WPAG series (from Wako Pure Chemical Industries, Ltd.), the CPI series (from San-Apro Limited), and so forth.

The thermolatent radical curing catalyst can be exemplified by organic peroxides such as cumene hydroperoxide, diisopropylbenzene peroxide, di-t-butyl peroxide, lauryl peroxide, benzoyl peroxide, t-butyl peroxyisopropyl carbonate, tert-butyl peroxy-2-ethylhexanoate, t-amyl peroxy-2-ethylhexanoate, and so forth, and azo compounds such as 2,2'-azobis(isobutyronitrile), 1,1'-azobis(cyclohexanecarbonitrile), 2,2'-azobis(2,4-dimethylvaleronitrile), dimethyl 2,2'-azobis(2-methylpropionate), and so forth. Only a single one of these may be used or two or more may be used in combination.

As noted above, a photolatent cationic curing catalyst or photolatent radical curing catalyst is suitably used as the aforementioned photopolymerization initiator. The photolatent cationic curing catalyst, also known as a photocationic polymerization initiator, substantially manifests the function of a curing agent when exposed to light. When a photolatent cationic curing catalyst is used, the compound containing the cation species is excited by light and a photodegradation reaction occurs and photocuring advances as a result.

Suitable examples of this photolatent cationic curing catalyst are as follows: triphenylsulfonium hexafluoroantimonate, triphenylsulfonium phosphate, p-(phenylthio)phenyldiphenylsulfonium hexafluoroantimonate, p-(phenylthio)phenyldiphenylsulfonium hexafluorophosphate, 4-chlorophenyldiphenylsulfonium hexafluorophosphate, 4-chlorophenyldiphenylsulfonium hexafluoroantimonate, bis[4-(diphenylsulfonio)phenyl]sulfide bishexafluorophosphate, bis[4-(diphenylsulfonio)phenyl]sulfide bishexafluoroantimonate, (2,4-cyclopentadien-1-yl)[(1-methylethyl)benzene]-Fe-hexafluorophosphate, diaryliodonium hexafluoroantimonate, and so forth. These can be readily acquired commercially, and, for example, the use of SP-150 and SP-170 (from the ADEKA Corporation), Irgacure 261 (from Ciba-Geigy), UVR-6974 and UVR-6990 (from Union Carbide), or CD-1012 (from the Sartomer Company Incorporated) is preferred. The use of an onium salt is preferred among the preceding. At least one type selected from triarylsulfonium salts and diaryliodonium salts is preferably used for the onium salt.

The photolatent radical curing catalyst can be exemplified by acetophenones such as acetophenone, diethoxyacetophenone, 2-hydroxy-2-methyl-1-phenylpropan-1-one, 2,2-dimethoxy-2-phenylacetophenone, benzyl dimethyl ketal, 4-(2-hydroxyethoxy)phenyl-(2-hydroxy-2-propyl) ketone, 1-hydroxycyclohexyl phenyl ketone, 2-methyl-2-morpholino(4-thiomethylphenyl)propan-1-one, 2-benzyl-2-dimethylamino-1-(4-morpholinophenyl)butanone, 2-hydroxyl-2-methyl-1-[4-(1-methylvinyl)phenyl]propanone oligomer, 1,1-dichloroacetophenone, and so forth; benzoins such as benzoin, benzoin methyl ether, benzoin ethyl ether, benzoin isopropyl ether, benzoin isobutyl ether, and so forth; benzophenones such as benzophenone, methyl o-benzoylbenzoate, 4-phenylbenzophenone, 4-benzoyl-4'-methyldiphenyl sulfide, 3,3',4,4'-tetra(t-butylperoxylcarbonyl)benzophenone, 2,4,6-trimethylbenzophenone, 4-benzoyl-N,N-dimethyl-N-[2-(1-oxo-2-propenyloxy)ethyl]benzenemethanamium bromide, (4-benzoylbenzyl)trimethylammonium chloride, and so forth; thioxanthones such as 2-isopropylthioxanthone, 4-isopropylthioxanthone, 2-chlorothioxanthone, 2,4-dimethylthioxanthone, 2,4-diisopropylthioxanthone, 2,4-dichlorothioxanthone, 1-chloro-4-propoxythioxanthone, 2-(3-dimethylamino-2-hydroxy)-3,4-dimethyl-9H-thioxanthon-9-one mesochloride, and so forth; xanthones; anthraquinones such as 2-methylanthraquinone, 2-amylanthraquinone, 2-t-butylanthraquinone, 1-chloroanthraquinone, and so forth; ketals such as acetophenone dimethyl ketal, benzyl dimethyl ketal, and so forth; 2-methyl-1-[4-(methylthio)phenyl]-2-morpholinopropan-1-one and 2-benzyl-2-dimethylamino-1-(4-morpholinophenyl)butan-1-one; and acylphosphine oxides. A single one of these may be used or two or more may be used in combination. Preferred for use among the preceding are acetophenones, benzophenones, and acylphosphine oxides, wherein 2-hydroxy-2-methyl-1-phenylpropan-1-one and 2-methyl-2-morpholino(4-thiomethylphenyl)propan-1-one are particularly preferred.

A photosensitizer may be used in combination with the above-described photopolymerization initiator in cure by exposure to active-energy radiation. Suitable photosensitizers are, for example, amines such as triethanolamine, methyldiethanolamine, triisopropanolamine, methyl 4-dimethylaminobenzoate, ethyl 4-dimethylaminobenzoate, isoamyl 4-dimethylaminobenzoate, (2-dimethylamino)ethyl benzoate, (n-butoxy)ethyl 4-dimethylaminobenzoate, 2-ethylhexyl-4-dimethylaminobenzoate, and so forth.

The amount of incorporation of the photosensitizer is preferably from 0.1 to 20 mass% relative to the curable resin composition of 100 mass%. At less than 0.1 mass%, the photopolymerization may not proceed more efficiently, while exceeding 20 mass% prevents the penetration of ultraviolet radiation into the interior and thus can prevent a satisfactory cure from occurring. From 0.5 to 10 mass% is more preferred.

The content of the cationic curing catalyst, expressed as the solids fraction of the amount of effective component excluding, for example, the solvent, is suitably 0.01 to 10 weight parts per 100 weight parts of the total amount of the curable organic compound. At less than 0.01 weight part, a further increase in the cure rate cannot be obtained and a satisfactory cure cannot be achieved in a short period of time and it may not be possible to more thoroughly manifest the functional effects of the present invention, i.e., the moldability. At least 0.1 weight part is more preferred and at least 0.2 weight part is even more preferred. At more than 10 weight parts, discoloration may occur during cure or when the molded article is heated. For example, a heat resistance of at least 200°C is required when the molded article is subjected to reflow mounting after the molded article has been obtained, and as a consequence not more than 10 weight parts is preferred from the standpoint of transparency and absence of discoloration. Not more than 5 weight parts is more preferred, not more than 3 weight parts is even more preferred, and not more than 2 weight parts is particularly preferred.

The content of the radical curing catalyst, expressed as the solids fraction of the amount of effective component excluding, for example, the solvent, is suitably 0.01 to 10 weight parts per 100 weight parts of the total amount of the curable organic compound. At less than 0.01 weight part, a further increase in the cure rate cannot be obtained and a satisfactory cure cannot be achieved in a short period of time and it may not be possible to more thoroughly manifest the functional effects of the present invention, i.e., the moldability. At least 0.1 weight part is more preferred and at least 0.2 weight part is even more preferred. At more than 10 weight parts, discoloration may occur during cure or when the molded article is heated. Not more than 5 weight parts is more preferred, not more than 3 weight parts is even more preferred, and not more than 2 weight parts is particularly preferred.

When curing agent in ordinary use is employed as the curing agent, e.g., an acid anhydride type, a phenol type, or an amine type, a curing agent in ordinary use may be used for these curing agents. Examples of the acid anhydride type are alicyclic carboxylic acid anhydrides such as tetrahydrophthalic anhydride, methyltetrahydrophthalic anhydride, trialkyltetrahydrophthalic anhydride, hexahydrophthalic anhydride, methylhexahydrophthalic anhydride, nadic anhydride, methylnadic anhydride, HET anhydride, himic anhydride, 5-(2,5-dioxotetrahydrofuryl)-3-methyl-3-cyclohexene-1,2-dicarboxylic anhydride, trialkyltetrahydrophthalic anhydride/maleic anhydride adduct, chlorendic acid, methylendomethylenetetrahydrophthalic anhydride, and so forth; the anhydrides of aliphatic carboxylic acids, such as dodecenylsuccinic anhydride, poly(azelaic anhydride), poly(sebacic anhydride), poly(dodecanedioic anhydride), and so forth; and aromatic carboxylic acid anhydrides such as phthalic anhydride, trimellitic anhydride, pyromellitic anhydride, benzophenonetetracarboxylic anhydride, ethylene glycol trimellitic anhydride, biphenyl tetracarboxylic anhydride, and so forth.

The phenol type curing agents can be exemplified by bisphenol A, tetrabromobisphenol A, bisphenol F, bisphenol S, 4,4'-biphenylphenol, 2,2'-methylenebis(4-methyl-6-tertbutylphenol), 2,2'-methylenebis(4-ethyl-6-tert-butylphenol), 4,4'-butylylenebis(3-methyl-6-tert-butylphenol), 1,1,3-tris(2-methyl-4-hydroxy-5-tert-butylphenol), trishydroxyphenylmethane, pyrogallol, and phenols that have a diisopropylidene skeleton; phenols that have a fluorene skeleton, e.g., 1,1-di-4-hydroxyphenylfluorene; polyphenol compounds such as phenolated polybutadienes; novolac resins for which a starting material is a phenol such as phenol, a cresol, an ethylphenol, a butylphenol, an octylphenol, bisphenol A, brominated bisphenol A, bisphenol F, bisphenol S, or a naphthol; and novolac resins such as phenol novolac resins that have the xylylene skeleton, phenol novolac resins that have the dicyclopentadiene skeleton, and phenol novolac resins that have the fluorene skeleton.

Among the previously described curing agents in ordinary use such as acid anhydride types, phenol types, and amine types, acid anhydride-type curing agents are preferred, wherein methyltetrahydrophthalic anhydride, tetrahydrophthalic anhydride, methylhexahydrophthalic anhydride, and hexahydrophthalic anhydride are more preferred and methylhexahydrophthalic anhydride and hexahydrophthalic anhydride are even more preferred.

When a curing agent in ordinary use such as an acid anhydride type, phenol type, or amine type is used, the content of the curing agent is preferably 25 to 70 mass% relative to the curable resin composition of 100 mass%. 35 to 60 mass% is more preferred. With regard to the mixing proportions between the previously described curable organic compound and these curing agents, the curing agent is preferably mixed in a proportion of 0.5 to 1.6 equivalents per 1 chemical equivalent of the curable organic compound. Mixing in a proportion of 0.7 to 1.4 equivalents per 1 chemical equivalent of the curable organic compound is more preferred and mixing in a proportion of 0.9 to 1.2 equivalents per 1 chemical equivalent of the curable organic compound is even more preferred.

A cure accelerator is preferably used in combination with the curing agent when the curing agent used is a curing agent in ordinary use such as an acid anhydride type, phenol type, or amine type. This cure accelerator can be exemplified by the acid salts of organic bases and aromatic compounds that have a tertiary nitrogen. The acid salt of an organic base can be exemplified by organic onium salts such as organophosphonium salts and the organoammonium salts and the acid salts of organic bases that have a tertiary nitrogen. The organophosphonium salt can be exemplified by phosphonium bromides that have four phenyl rings, e.g., tetraphenylphosphonium bromide and triphenylphosphine/ toluene bromide; the organoammonium salts can be exemplified by tetra($C_1$-$C_8$)alkylammonium bromides, e.g., tetraoctylammonium bromide, tetrabutylammonium bromide, and tetraethylammonium bromide; and the acid salts of organic bases that have a tertiary nitrogen can be exemplified by the organic acid salts of alicyclic bases that have a tertiary nitrogen in the ring and the organic acid salts of various imidazoles.

The organic acid salts of alicyclic bases that have a tertiary nitrogen in the ring can be exemplified by the salts of a diaza compound with a phenol, a polybasic carboxylic acid as described below, or a phosphinic acid, e.g., the phenol salt of 1,8-diazabicyclo(5,4,0)undec-7-ene and the octylic acid salt of 1,8-diazabicyclo(5,4,0)undec-7-ene.

The organic acid salts of an imidazole can be exemplified by the salt of an imidazole with an organic acid such as a polybasic carboxylic acid. The imidazole can be exemplified by 2-methylimidazole, 2-phenylimidazole, 2-undecylimidazole, 2-heptadecylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecylimidazole, and so forth. Preferred imidazoles are, for example, the same imidazoles as the phenyl-substituted imidazoles described below for the aromatic compound having a tertiary nitrogen.

The polybasic carboxylic acid can be exemplified by aromatic polybasic carboxylic acids such as phthalic acid, isophthalic acid, terephthalic acid, trimellitic acid, pyromellitic acid, naphthalenedicarboxylic acid, and by aliphatic polybasic carboxylic acids such maleic acid and oxalic acid, wherein preferred polybasic carboxylic acids can be exemplified by aromatic polybasic carboxylic acids such as terephthalic acid, trimellitic acid, and pyromellitic acid. The preferred salts of an imidazole with an organic acid such as a polybasic carboxylic acid are, for example, the polybasic carboxylic acid salts of an imidazole that has a substituent in position 1. For example, the trimellitic acid salt of 1-benzyl-2-phenylimidazole is more preferred.

The aforementioned aromatic compound having a tertiary nitrogen can be exemplified by phenyl-substituted imidazoles and phenols substituted by a tertiary amino group. The phenyl-substituted imidazoles can be exemplified by 2-phenylimidazole, 2-phenyl-4-methylimidazole, 1-benzyl-2-phenylimidazole, 1-benzyl-2-methylimidazole, 1-cyanoethyl-2-phenylimidazole, 2-phenyl-3,5-dihydroxymethylimidazole, 2-phenyl-4-hydroxymethyl-5-methylimidazole, 1-cyanoethyl-2-phenyl-3,5-dicyanoethoxymethylimidazole. The phenyl-substituted imidazole is preferably, for example, an imidazole having an aromatic substituent at position 1 and more preferably is 1-benzyl-2-phenylimidazole. The phenol substituted by a tertiary amino group can be exemplified by phenols that have from 1 to 3 di($C_{1-4}$)alkylamino($C_{1-4}$)alkyl groups, e.g., 2,4,6-tri(dimethylaminomethyl)phenol.

Among the cure accelerators cited above, particularly preferred cure accelerators can be exemplified by the phenol salt of 1,8-diazabicyclo(5,4,0)undec-7-ene, the octylic acid salts of 1,8-diazabicyclo(5,4,0)undec-7-ene, 2,4,6-tri(dimethylaminomethyl)phenol, tetrabutylammonium bromide, tetraethylammonium bromide, 1-benzyl-2-phenylimidazole, the trimellitic acid salt of 1-benzyl-2-phenylimidazole, tetraphenylphosphonium bromide, and triphenylphosphine/ toluene bromide.

A single cure accelerator can be used or two or more can be used in combination. The amount of use of the cure accelerator is preferably 0.01 to 5 mass% relative to the total mass of the curable resin composition of 100 mass%, while 0.03 to 3 mass% is more preferred.

The curable resin composition also preferably contains a component that exhibits flexibility (a flexibility component); this makes it possible to provide a unified resin composition. The presence of the flexibility component also improves the hardness of the resin.

This flexibility component may be a compound different from the previously described curable compound, or at least one type selected from the previously described curable compound may be the flexibility component.

In specific terms, this flexibility component is preferably a compound that has an oxyalkylene skeleton as represented by -[-($CH_2$)$_n$-O-]$_m$- (n is an integer with a value of at least 2 and m is an integer with a value of at least 1. Preferably, n is an integer from 2 to 12 and m is an integer from 1 to 1000, and more preferably n is an integer from 3 to 6 and m is an integer from 1 to 20), and is preferably, for example, (1) an oxybutylene group-containing epoxy compound (Y-7217 from Japan Epoxy Resin Co., Ltd., epoxy equivalent weight = 437, liquid epoxy compound (at 10°C and above)). Other preferred flexibility components are (2) high molecular weight epoxy compounds (for example, hydrogenated bisphenol (YX-8040 from Japan Epoxy Resin Co., Ltd., epoxy equivalent weight = 1,000, solid hydrogenated epoxy compound)); (3) alicyclic solid epoxy compounds (EHPE-3150 from (Daicel Chemical Industries, Ltd.); (4) alicyclic liquid epoxy compounds (Celloxide 2081 from Daicel Chemical Industries, Ltd.); and (5) liquid rubbers such as liquid nitrile rubber, high molecular weight rubbers such as polybutadiene, and microparticulate rubbers having a particle diameter not more than 100 nm.

More preferred among the preceding is a compound that contains a curable functional group in terminal position and/or in side chain position and/or in the main chain skeleton. This "curable functional group" denotes a "functional group that cures under the effect of heat or light, e.g., an epoxy group (a group that carries out the curing reaction of the resin composition)".

A compound that contains a curable functional group is preferably used for the aforementioned flexibility component, and this compound is preferably an epoxy group-containing compound and more preferably is a compound having the oxybutylene group ($-[-(CH_2)4-O-]_m-$ (m is defined as above)).

The content of the flexibility component is preferably not more than 40 mass% relative to the total mass of the curable organic compound and the flexibility component of 100 mass%. Not more than 30 mass% is more preferred and not more than 20 mass% is even more preferred. At least 0.01 mass% is preferred, at least 0.1 mass% is more preferred, and at least 0.5 mass% is even more preferred.

The previously described curable resin composition preferably also contains a mold release agent. Ordinary mold release agents can be suitably used as this mold release agent, and at least one compound selected from the group consisting of $C_{8-36}$ alcohols, $C_{8-36}$ carboxylic acids, $C_{8-36}$ carboxylate esters and $C_{8-36}$ carboxylate salts is preferred. When such a mold release agent is present, the mold can then be easily detached when curing is carried out using a mold; scratching and damage to the surface of the cured material can be prevented; and the appearance can be controlled and transparency can be manifested. This makes it possible, through synergism with the functional effects due to the production process of the present invention comprising the previously described first step and second step, to obtain a cured molded article having an even better transparency, surface appearance, dimensional accuracy, and ability to replicated the mold and to provide a cured molded article that is even more useful for application as an electrical/electronic component material and for application as an optical member.

Among the compounds cited above, in particular alcohols, carboxylic acids, and carboxylate esters are more preferred for their ability to manifest a thorough mold release effect and to do so without poisoning the cationic curing reaction, and carboxylic acids (particularly higher fatty acids) and carboxylate esters are more preferred. Amines are preferably not used as the mold release agent in association with a cationic curing reaction because amines can poison the cationic curing reaction.

The compounds under consideration may have any structure selected from, for example, straight chain, branched, cyclic, and so forth, wherein branched compounds are preferred.

The number of carbons in these compounds is preferably an integer from 8 to 36; this serves to provide a cured material that exhibits an excellent releasability without impairing the functionalities of the resin composition, e.g., transparency, processability, and so forth. The number of carbons is more preferably 8 to 20 and even more preferably is 10 to 18.

The aforementioned $C_{8-36}$ alcohol may be a monohydric or polyhydric alcohol and may a straight chain or branched alcohol. Specific suitable examples are octyl alcohol, nonyl alcohol, decyl alcohol, undecyl alcohol, lauryl alcohol, tridecyl alcohol, tetradecyl alcohol, pentadecyl alcohol, palmityl alcohol, margaryl alcohol, stearyl alcohol, nonadecyl alcohol, eicosyl alcohol, ceryl alcohol, melissyl alcohol, methylpentyl alcohol, 2-ethylbutyl alcohol, 2-ethylhexyl alcohol, 3,5-dimethyl-1-hexanol, 2,2,4-trimethyl-1-pentanol, dipentaerythritol, 2-phenylethanol, and so forth. Aliphatic alcohols are preferred for this alcohol, whereamong octyl alcohol (octanol), lauryl alcohol, 2-ethylhexyl alcohol (2-ethylhexanol), and stearyl alcohol are more preferred.

The aforementioned $C_{8-36}$ carboxylic acids may be a monobasic carboxylic acid or a polybasic carboxylic acid and are suitably, for example, 2-ethylhexanoic acid, octanoic acid, nonanoic acid, decanoic acid, undecanoic acid, lauric acid, tridecanoic acid, tetradecanoic acid, pentadecanoic acid, palmitic acid, 1-heptadecanoic acid, stearic acid, nonadecanoic acid, eicosanoic acid, 1-hexacosanoic acid, behenic acid, and so forth. Octanoic acid, lauric acid, 2-ethylhexanoic acid, and stearic acid are preferred.

The aforementioned $C_{8-36}$ carboxylate esters are suitably, for example, (1) a carboxylate ester as obtained from an alcohol as described above and a carboxylic acid as described above; (2) a carboxylate ester as obtained by combining a carboxylic acid as described above with a $C_{1-7}$ alcohol, e.g., methanol, ethanol, propanol, heptanol, hexanol, glycerol, benzyl alcohol, and so forth; (3) a carboxylate ester as obtained by combining an alcohol as described above with a $C_{1-7}$ carboxylic acid, e.g., acetic acid, propionic acid, hexanoic acid, butanoic acid, and so forth; and (4) a carboxylate ester as obtained from a $C_{1-7}$ alcohol and a $C_{1-7}$ carboxylic acid, wherein the carboxylate ester is a compound having a total of 8 to 36 carbons. Among the preceding, the carboxylate esters of (2) and (3) are preferred and methyl stearate, ethyl stearate, and octyl acetate are more preferred.

The aforementioned $C_{8-36}$ carboxylate salt is suitably a carboxylate salt as obtained by the combination of a carboxylic acid as described above with an amine or Na, K, Mg, Ca, Mn, Fe, Co, Ni, Cu, Zn, or Sn. Preferred thereamong are Zn stearate, Mg stearate, Zn 2-ethylhexanoate, and so forth.

More preferred among the preceding compounds are stearic acid-type compounds such as stearic acid and stearate esters and alcohol-type compounds, while the stearic acid-type compounds are more preferred.

The content of the mold release agent is preferably not more than 10 mass% relative to the curable resin composition of 100 mass%. The use of more than 10 mass% can impair the cure of curable resin. From 0.01 to 5 mass% is more preferred and from 0.1 to 2 mass% is even more preferred.

In addition to the essential components and preferred components described above, the curable resin composition may contain, for example, the following insofar as the functional effects of the present invention are not impaired: finely divided inorganic particles, reactive diluents, saturated compounds that lack an unsaturated bond, pigments, dyes, oxidation inhibitors, ultraviolet absorbers, light stabilizers, plasticizers, unreactive compounds, chain transfer agents, thermal polymerization initiators, anaerobic polymerization initiators, polymerization inhibitors, inorganic fillers, organic fillers, adhesion improves such as coupling agents, thermal stabilizers, antibacterials/antimolds, flame retardants, matting agents, defoamants, levelling agents, wetting agents/dispersants, sedimentation inhibitors, thickeners/antisagging agents, inhibitors of color irregularities, emulsifying agents, slip/scratch inhibitors, skinning inhibitors, drying agents, stainproofing agents, antistatic agents, electroconductive agents (static auxiliaries), and so forth.

The curable resin composition preferably has a viscosity of not more than 10,000 Pa·s. This provides better processing characteristics and can yield a cured molded article with a better dimensional accuracy and a better ability to replicate the mold. Not more than 1,000 Pa·s is more preferred and not more than 200 Pa·s is even more preferred. In addition, at least 0.01 Pa·s is preferred. At least 0.1 Pa·s is more preferred, at least 1 Pa·s is even more preferred, at least 5 Pa·s is particularly preferred, and at least 10 Pa·s is most preferred.

This viscosity can be measured using the procedure described below for the examples.

The curable resin composition preferably has a shrinkage ratio of not more than 3% in the primary cure (the cure in the first step). This shrinkage ratio is more preferably not more than 1%. When the shrinkage ratio in the primary cure is in the indicated range, the ability to replicate or reproduce the pattern (e.g., the mold) is good and the shape is easily transferred to a lens molding or sheet surface. In the production process described in the preceding, the curing process is divided into two stages, and mainly the reaction of the curable organic compound occurs in the first stage. It is possible here to impart a shape at a low shrinkage ratio in, for example, in shape reproduction using a pattern such as a mold. Mainly the condensable inorganic compound undergoes reaction in the second stage, and, since the shape itself has already been set during the primary cure, the shape provided by the primary cure can be maintained, even when the secondary cure is carried out without using a pattern, and a stable shape is thus obtained. At a large shrinkage ratio, the cured material detaches from the pattern due to shrinkage at the pattern and height differences are produced in the surface of the molded material. The appearance of these phenomena can be inhibited when the mold shrinkage ratio is in the previously indicated range.

The shrinkage ratio in the primary cure is the shrinkage ratio before and after the first step. In specific terms, for example, as described below in the examples, it may be determined from the amount of volumetric shrinkage at 130°C before and after a 130°C x 2 minute curing step. This shrinkage ratio is most preferably determined by actual measurement, but when this is problematic, it may be estimated by calculation by measuring the density and linear expansion coefficient at from room temperature to 130°C.

The present invention is also a cured molded article obtained by the previously described production method. Since this cured molded article is obtained using the previously described production method, it has a small shrinkage ratio, an excellent heat resistance and abrasion resistance, and an excellent mold release behavior, an excellent resistance to discoloration, and a transparency and can exhibit satisfactory mechanical properties and optical properties. The cured molded article is preferably a molded article provided by the use of a mold and may have, for example, a film, sheet, or pellet shape.

< Composition of the cured molded article >

The present invention is additionally a cured molded article that characteristically contains a metalloxane component and an organic resin component wherein the metal element constituting the metalloxane component is at least 10 mass% relative to the total mass of the cured molded article of 100 mass%; the content, in the metal element constituting the metalloxane component, of metal element for which the number of bonds with a hydrocarbon group is n-1 or n-2 (n is the atomic valence of the metal element and represents an integer equal to or greater than 2) is not more than 50 atom% relative to the total amount of metal element constituting the metalloxane component of 100 atom%; and the content, in the metal element constituting the metalloxane component, of metal element having a bond represented by Y-M (M represents a metal element and Y represents at least one type selected from the group consisting of a hydrogen atom, a halogen atom, a hydroxyl group, and an RO group (R represents a hydrocarbon group)) is not more than 35 atom% relative to the total amount of metal element constituting the metalloxane component of 100 atom%; and the content of component presenting a particulate form in the metalloxane component is not more than 50 mass% relative to the total mass of the metalloxane component of 100 mass%.

When this structure is present, the cured molded article has an excellent hardness, heat resistance, and optical properties.

This cured molded article contains a metalloxane component and an organic resin component. These are the essential components, but it may contain other components, and a single one of each component may be used or two or more of each component may be used.

The metalloxane component is a component that contains the metalloxane bond (M-O-M bond) in its structure. The metal element M is the same as the metal elements described above in relation to the condensable inorganic compound. The metal element constituting the metalloxane component in the cured molded article us at least 10 mass% relative to the total mass of the cured molded article of 100 mass%. At less than 10 mass%, there is little metalloxane component in the cured molded article and the hardness provided by the metalloxane component then does not undergo an adequate increase, and as a consequence the cured molded article undergoes discoloration during the secondary cure or during use of the cured molded article and particularly during long-term use in a high-temperature environment at about 80°C or above or use in an environment exposed to ultraviolet radiation. The content of metal element constituting the metalloxane component is preferably at least 15 mass% and more preferably at least 20 mass%, relative to the total mass of the cured molded article of 100 mass%.

The content of metal element constituting the metalloxane component is preferably not more than 50 mass% relative to the total mass of the cured molded article of 100 mass%. Not more than 40 mass% is more preferred and not more than 30 mass% is even more preferred. When the content of metal element constituting the metalloxane component is too large, the resin component assumes a high viscosity and handling becomes problematic.

In the cured molded article under consideration, the content, in the metal element constituting the metalloxane component, of metal element for which the number of bonds with a hydrocarbon group is n-1 or n-2 (n is the atomic valence of the metal element and represents an integer equal to or greater than 2) is not more than 50 atom% relative to the total amount of metal element constituting the metalloxane component of 100 atom%. For example, the atomic valence n is 4 when the metal element is Si, and based on this the content of Si having 2 or 3 bonds to a hydrocarbon group is not more than 50 atom% relative to the total amount of Si constituting the metalloxane component (siloxane component) of 100 atom%. When the metalloxane component contains two or more metal elements, the atomic valence n then represents the average value of the atomic valences of the individual metal elements. The hydrocarbon group is preferably an alkyl group, aryl group, aralkyl group, and so forth and may contain substituents.

When the content of metal element for which the number of bonds to a hydrocarbon group is n-1 or n-2 exceeds 50 atom%, little three-dimensional crosslinking structure is present in the molded article and the molded article has a low hardness, and as a result the molded article is susceptible to scratching during molding or use.

The content of metal element for which the number of bonds to a hydrocarbon group is n-1 or n-2 is preferably not more than 40 atom% and more preferably not more than 20 atom%, relative to the total amount of metal element constituting the metalloxane component of 100 atom%. This content is preferably not more than 10 atom% and most preferably is 0 atom%, i.e., such a metal element is not present.

In the cured molded article under consideration, the content, in the metal element constituting the metalloxane component, of metal element having a bond represented by Y-M (M represents a metal element and Y represents at least one type selected from the group consisting of a hydrogen atom, a halogen atom, a hydroxyl group, and an RO group (R represents a hydrocarbon group)) is not more than 35 atom% relative to the total amount of metal element constituting the metalloxane component of 100 atom%. At above 35 atom%, the molded article has a low crosslinking density and a satisfactorily high hardness is then not reached even at a high concentration of metalloxane component, and as a consequence the molded article is susceptible to scratching during molding or during use. In addition, it is also difficult to achieve a satisfactory inhibition of the ultraviolet-induced decline in the transparency of the molded article. The content of metal element having this Y-M bond is preferably not more than 33 atom%, more preferably not more than 30 atom%, and even more preferably not more than 25 atom%. The content of metal element having this Y-M bond is preferably at least 0.1 atom% relative to the total amount of metal element constituting the metalloxane component of 100 atom%. At least 1 atom% is more preferred and at least 5 atom% is even more preferred. When the content of metal element having a Y-M bond is too low, the compatibility between the metalloxane component and organic resin component is then low and flaking is prone to occur during molding.

Preferred embodiments of M are as already described above. The Y is preferably at least one type selected from the group consisting of the hydroxyl group and RO groups. The R here is preferably an alkyl group, aryl group, or aralkyl group.

In addition, the content of component presenting a particulate form in the metalloxane component in the cured molded article is not more than 50 mass% relative to the total mass of the metalloxane component of 100 mass%. This "presenting a particulate form" denotes a particle diameter of at least 10 nm. When the content of particulate component exceeds 50 mass%, hazing is produced in the molded article when the metalloxane skeleton is present in large amounts in the molded article. The content of particulate component in the metalloxane component is preferably not more than 30 mass% and is more preferably not more than 20 mass% relative to the total mass of the metalloxane component of 100 mass%. Not more than 10 mass% is even more preferred, not more than 5 mass% is still more preferred, not more than 1 mass% is particularly preferred, and 0 mass% is most preferred, that is, a component presenting a particulate form is not present in the metalloxane component.

The content of the previously described organic resin component in the cured molded article is preferably from 0.1 to 60 mass% relative to the total mass of the cured molded article of 100 mass%. When the content of the organic resin component is too low, the resin composition takes on a high viscosity and handling becomes problematic and as a result reproduction of the pattern by the molded article is impaired in the primary cure. When the content of the organic resin component is too large, the cured molded article then has a low metalloxane component content and the hardness is not adequately raised by the metalloxane component, and as a consequence the cured molded article undergoes discoloration during the secondary cure or during use of the cured molded article and particularly during long-term use in a high-temperature environment at about 80°C or above or use in an environment exposed to ultraviolet radiation. The content of the organic resin component is more preferably at least 1 mass%, even more preferably at least 5 mass%, and particularly preferably at least 10 mass%. The content of the organic resin component is more preferably not more than 50 mass% and even more preferably is not more than 40 mass%.

The cured molded article preferably contains a carboxylic acid-type structure and/or an ether skeleton. Hydrogen bonding then improves the compatibility of the individual components in the resin composition or cured material therefrom, and the obtained molded article will have an excellent transparency as a result. The strength of the molded article is also improved.

The carboxylic acid-type structure denotes a structure that has the bond represented by -O-(C=O)- and is preferably at least one type selected from the group consisting of carboxylic acids, carboxylate esters, and carboxylate salts. At least one type selected from carboxylic acids and carboxylate esters is more preferred. The carboxylic acid-type structure is preferably a carboxylic acid-type structure that originates with the structure of the curable organic compound.

The ether skeleton is a structure that contains the bond represented by R'-O-R" (R' and R" represent organic groups, which may be the same as each other or may differ from one another). Letting the total amount of all the ether skeleton in the cured molded article be 100 mol%, preferably at least 10 mol% thereof is obtained by the ring opening of the oxirane ring. At least 50 mol% is more preferred.

The total amount of oxygen atom participating in the carboxylic acid-type structure and/or ether skeleton is preferably at least 0.1 mass% relative to the total mass of the cured molded article of 100 mass%. At least 1 mass% is more preferred and at least 5 mass% is even more preferred. Not more than 25 mass% is preferred, not more than 20 mass% is more preferred, and not more than 15 mass% is still more preferred. When this oxygen atom content is too large, the molded article experiences a large oxygen-mediated deterioration in heat resistance (discoloration, reduced transparency, and so forth). When this oxygen atom content is too small, a satisfactory hydrogen bonding is not obtained and the compatibility of the individual components in the resin composition or cured material therefrom is reduced, and the transparency and strength of the obtained molded article is then reduced.

The previously described cured molded article is preferably obtained by curing the previously described curable resin composition. Thus, this cured molded article is preferably obtained by curing a curable resin composition that comprises a condensable inorganic compound, a curable organic compound, and a curing agent. The above-referenced metalloxane component is preferably a component that originates from the previously described condensable inorganic compound, and the previously described organic resin component is preferably a component that originates with the curable organic compound.

< Measurement and evaluation methods for the composition of the cured molded article and other items >

A sheet-form molded article with a length of 100 mm, a width of 100 mm, and a thickness of 1 mm was fabricated using the conditions described for the particular example or comparative example, infra, and this was cut as appropriate and used as the sample (molded article sample) for the measurement and evaluation of the composition of the molded article and other items.

The method of quantitating the metal element constituting the metalloxane component in the cured molded article will be described first.

The obtained molded article sample was submitted to elemental analysis using an elemental analyzer (CHN CORDER JM10, from J-Science Lab.) and the carbon, hydrogen, and nitrogen were quantitated. In addition, 5 mg of the molded article sample was placed in a platinum boat; several drops of 50% sulfuric-nitric acid were added dropwise; digestion was carried out at 950°C in an electric oven; and the ash was submitted to quantitative measurement. The constituent metal element present in the ash was calculated using a fluorescent X-ray analyzer and the amount of metal element was calculated from the oxidation-stable state of the metal element.

(Quantitation (approximation) of the metal content in the ash)

Analysis was performed on the sample using a fluorescent X-ray analyzer. Elemental qualitative analysis and measurement of the mass% concentration were performed for metal elements having a mass number equal to Na and above.

measurement instrumentation: PW2404 from Philips
calculation method: FP method (fundamental parameter method)

(Example: For Example 1-5)

H : 5.42%, C : 28.34%, N : 0%, ash : 59.90%

According to fluorescent X-ray analysis, at least 99 weight% of the metal element in the ash was Si, and, since this was equal to or greater than 95 weight%, the approximation was made that the metal element consisted of the single component Si. Using 28.0855 for the atomic mass of Si and 15.9994 for the atomic mass of oxygen, 28.0% was calculated as follows for the amount of metal element in the ash as the amount of Si.

$$59.90 \times (28.0855/(28.0855 + 15.9994 \times 2)) = 28.0\%$$

The methods described below were used to quantitate the metal element having n-1 or n-2 bonds to hydrocarbon groups and to quantitate the metal element having a bond represented by Y-M.
In solid-state nuclear magnetic resonance (solid-state NMR), the position (chemical shift) of the nuclear magnetic resonance peak varies as a function of the coordination state of the metal element present in the sample and indicates the characteristic chemical shift corresponding to the type and number of bonds and groups coordinated to each metal element. For example, characteristic peaks are respectively observed depending on the number of hydrocarbon groups bonded to the metal element, the number of RO groups bonded to the metal element, and the number of metalloxane bonds to the metal element.

(Examples of the variation in the chemical shift as a function of the number of hydrocarbon groups bonded to the metal element)

● A chemical shift to -90 ppm to -120 ppm is observed for the hydrolysis and condensation product from a tetraalkoxysilane (the number of bonds to a hydrocarbon group is n-4 for all the silicon atoms).
● A chemical shift to -40 ppm to -90 ppm is observed for the hydrolysis and condensation product from a methyltrialkoxysilane (the number of bonds to a hydrocarbon group is n-3 for all the silicon atoms).
● A chemical shift to 0 ppm to -30 ppm is observed for the hydrolysis and condensation product from a dimethyldialkoxysilane (the number of bonds to a hydrocarbon group is n-2 for all the silicon atoms).
● A chemical shift to 0 ppm to 30 ppm (extrapolated from solution) is observed for the hydrolysis and condensation product from a trimethylmonoalkoxysilane (the number of bonds to a hydrocarbon group is n-1 for all the silicon atoms).

(Examples of the presence/absence of a hydroxyl group or OR group (R: hydrocarbon group) bonded to the metal element and of the variation in the chemical shift as a function of the number of bonds)

Chemical shifts are observed at the following positions for the hydrolysis and condensation product of a methyltrialkoxysilane.

● A chemical shift is observed at around 47 ppm for 2 OR groups.
● A chemical shift is observed at around 56 ppm for 1 OR group.
● A chemical shift is observed at around 65 ppm for 0 OR group.

Using measurement of a solid sample by solid-state nuclear magnetic resonance (solid-state NMR), the coordination state of the metal element present in a sample can be qualitatively and quantitatively determined based on the different chemical shifts as described above. The following analyses were performed using this method. $^{29}$Si-NMR was run when the molded article sample contained silicon as the metal element (i.e., a molded article sample having the siloxane bond). The measurement sample was obtained by grinding the molded article sample. The measurement instrumentation and measurement conditions are as follows.

(instrument) AVANCE400 solid-state NMR instrument from BRUKER
(conditions) measured nucleus: $^{29}$Si (observation nuclear magnetic frequency: 79.487 MHz)

measurement mode: DD-MAS (dipole decoupling/magic angle spinning) method
irradiation pulse: 10 to 60° pulse
pulse repeat time: at least 120 seconds
number of integrations: 200 to 4000 times
sample rotation: 6 kHz
measurement temperature: 300 K
external reference: sodium 3-(trimethylsilyl)propane-1-sulfonate (chemical shift = 1.534 ppm)

The irradiation pulse may be adjusted within the range indicated above depending on the relaxation time of the measured nucleus, and the number of integrations and sample rotation may be adjusted within the indicated ranges in accordance with the sample rotor diameter used for the measurement.

(Quantitation of the metal element having n-1 or n-2 bonds to a hydrocarbon group)

Using solid-state nuclear magnetic resonance (solid-state NMR), the percentage was determined, with reference to the metal element present in the molded article sample, for the total amount of metal element having n-1 (n: atomic valence of the metal element, n = 4 when the metal element is silicon) hydrocarbon groups bonded to the metal element and metal element having n-2 hydrocarbon groups bonded to the metal element. Specifically, the sample was measured by solid-state NMR; the observed peak area was determined for each silicon atom in correspondence to the number of bonded hydrocarbon groups; and the total content of silicon atoms having 2 or 3 hydrocarbon groups bonded thereto was determined from the peak area ratio.

(Quantitation of the metal element having a Y-M bond)

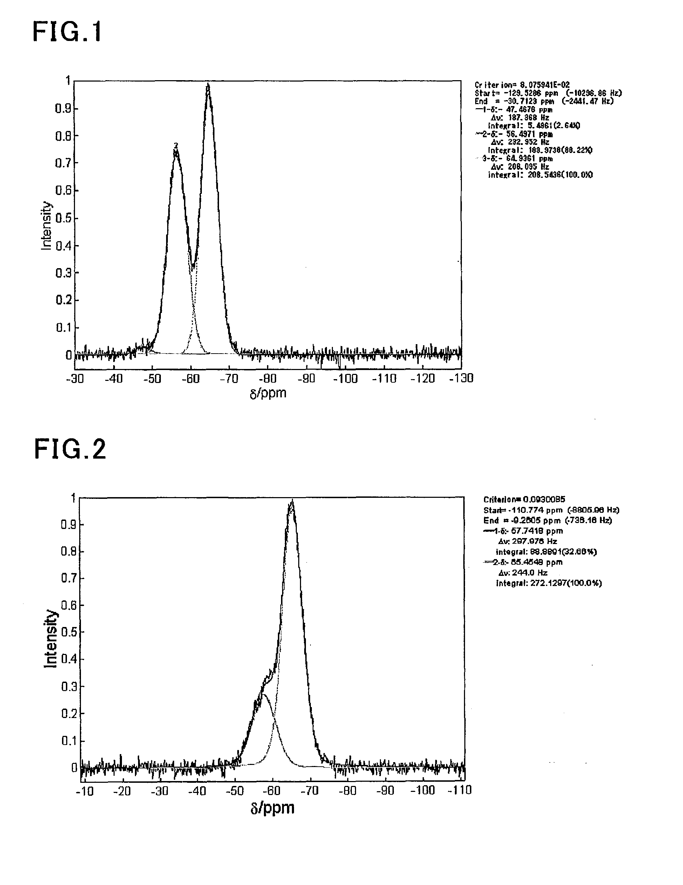

Using solid-state nuclear magnetic resonance (solid-state NMR), the percentage was determined, with reference to the metal element present in the molded article sample, for the total amount of metal element having one or more Y groups (the hydroxyl group or OR group in the present case) bonded to the metal element. Specifically, the sample was measured by solid-state NMR; the observed peak area was determined for each silicon atom using assignment to silicon having 3 Y groups (chemical shift: -41.4 ppm (extrapolated from solution)), silicon having 2 Y groups (chemical shift: around 47 ppm), silicon having 1 Y group (chemical shift: around 56 ppm), and silicon having 0 Y groups (chemical shift: around 65 ppm); and the content of silicon atoms having at least 1 Y group in the total silicon atom population was determined from the peak area ratio.
Examples of solid-state NMR spectra are given in FIG. 1 and FIG. 2. FIG. 1 gives the $^{29}$Si-NMR spectrum of the molded article obtained in Reference Example 1. FIG. 2 gives the $^{29}$Si-NMR spectrum of the molded article obtained in Example 1-5.
The method for evaluating the particulate component in the metalloxane component is described in the following. The molded article sample was sectioned in the thickness direction to a thickness of 100 nm using a microtome and transmission measurements were performed using a field-emission scanning electron microscope (FE-SEM) and the presence/absence of particulate material was determined and this element component was also qualitatively analyzed. The quantitative determination of the particulate component was carried out using elemental analysis, fluorescent X-ray analysis, solid-state NMR, and FE-SEM.

(Measurement instrumentation and measurement conditions)

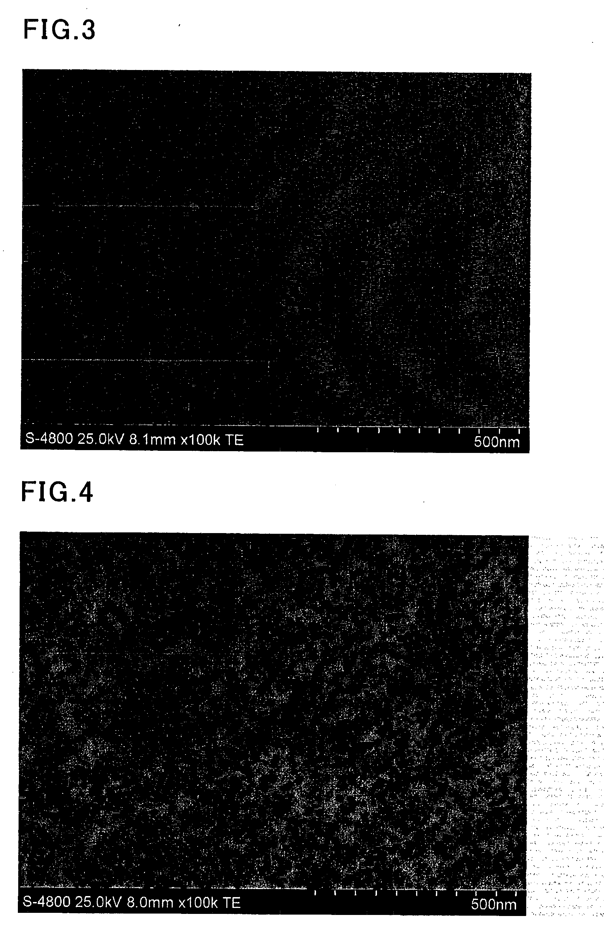

FE-SEM S-4800 (equipped with a cold field emission gun) from Hitachi High-Technologies Corporation
Equipped with an EDAX Genes is 2000 EDS detector acceleration voltage: 25 kV
emission current: 10 $\mu$A
condenser: 16
W. D. = 8 mm
EDS: acceleration voltage = 10 kV, W. D. = 15 mm
Examples of the scanning electron micrographs are given in FIG. 3 and FIG. 4. FIG. 3 is a scanning electron micrograph of the molded article obtained in Example 1-5. FIG. 4 is a scanning electron micrograph of the molded article obtained in Comparative Example 5.
FIG. 3 shows a uniform resin composition free of particles of 1 nm or greater.
FIG. 4 shows, by qualitative elemental analysis by FE-SEM for the case of Comparative Example 5, that Si is present in the black particles in the photograph and is also almost entirely absent from the organic resin component. Tetrafunctional $SiO_2$ particles were shown by elemental analysis, fluorescent X-ray analysis, solid-state NMR, and FE-SEM to be present at 13.5 weight% in the molded article.

The method for quantitating the organic resin component in the cured molded article is described in the following. The charge composition for the organic resin component and inorganic component is known in advance in the present invention. It has also been demonstrated by solid-state NMR that condensation of the inorganic component during the primary cure is almost entirely absent. In addition, it has been shown by pyrolysis gas chromatography that the water and alcohol generated by the cure of the inorganic component are the main components in the component that volatizes during the secondary cure. Accordingly, the organic resin component in the molded article after the secondary cure can be calculated on an approximate basis, and the values given in Table 10 were found for the organic resin component content in the cured molded articles obtained in the individual examples. Moreover, even in the case of a molded article whose composition is not yet known, qualitative/quantitative determination of the inorganic component is possible by solid-state NMR, elemental analysis, FT-IR, and fluorescent X-ray analysis, and the organic resin component content can then be determined by back calculation.

(Example: For Example 1-5)

Weight concentration of the curable organic resin component in the charge: 29.644 weight%
Weight after secondary cure/weight after primary cure: 93.3 weight%
The content of the organic resin component in the cured molded article is then calculated from the preceding as follows:
29.644/93.3 x 100 = 31.7 weight%
The method of evaluating the carboxylic acid-type structure and ether skeleton in the cured molded article is described in the following.
Qualitative analysis (presence/absence) of the functional groups, e.g., carboxylic acid structures, hydroxyl group, ether skeleton, and so forth, was performed by carrying out measurement on the molded article sample using infrared absorption spectroscopy (FT-IR).
With regard to the measurement instrumentation and conditions, a Nexus-670 from THERMO ELECTRON Co., Ltd., was used for the FT-IR instrument.
The charge composition is known in advance in the present invention, and it is therefore possible to carry out calculations on an approximate basis of the weight concentration in the molded article of the oxygen originating with the carboxylic acid-type structures and the oxirane ring. Even when the substances are not known in advance, the oxygen atoms originating with the carboxylic acid-type structures and ether skeleton (or the oxirane ring) can be quantitatively determined by solid-state NMR, pyrolysis gas chromatography, elemental analysis, and qualitative/quantitative analysis by FT-IR.

(Example: For Example 1-5)

Concentration in the alicyclic epoxy resin of oxygen originating with carboxylic acid-type structures and the oxirane ring: 25.37 weight%
Weight after secondary cure/weight after primary cure: 93.3 weight%
The weight concentration in the cured molded article of oxygen originating with carboxylic acid-type structures and the oxirane ring is then calculated from the preceding as follows: (29.644 x 0.25366)/93.3 x 100 = 8.06 weight%.

< Properties of the cured molded article >

The cured molded article preferably has a parallel transmittance at 500 nm of at least 80%. At least 85% is more preferred and at least 90% is even more preferred. In addition, the parallel transmittance at 400 nm is preferably at least 75%. At least 80% is more preferred and at least 85% is even more preferred. A low parallel transmittance results in large light losses and also in a low color reproducibility when the molded article is used as an optical material.
The cured molded article preferably has a pencil hardness of at least 1H. At least 3H is more preferred, at least 5H is even more preferred, and at least 7H is particularly preferred. When the pencil hardness is in the indicated range, scratching and so forth is resisted during use of the molded article and during its assembly (mounting). Because the cured molded article of the present invention makes it possible to provide a hardness deriving from the inorganic component (metalloxane component) while maintaining the productivity (moldability) deriving from the organic resin component, the cured molded article of the present invention has made it possible to obtain, by the use of a mold or pattern, a lens that exhibits a high surface hardness.

< Applications of the cured molded article >

As described in the preceding, the cured molded article of the present invention exhibits a range of excellent properties, e.g., an excellent hardness, an excellent heat resistance, excellent optical properties, and so forth, and as a consequence is useful in a variety of applications, for example, as an optical member, as a material for a machine part, as a material for an electrical/electronic part, as a material for automobile parts, as a material in civil engineering and construction, as a molding material, as a material for paints and adhesives, and so forth. Among the preceding, it is particularly well adapted for use in optical elements and members, optodevice elements, and display device elements. As specific examples of these applications, the cured molded article of the present invention is well adapted for lens applications such as eyeglass lenses, imaging lenses for cameras such as (digital) cameras, portable phone cameras, vehicle-mounted cameras, security cameras, and so forth, as well as for light focusing lenses and light-diffusing lenses; for transparent sheets such as watch crystals and cover glasses for display devices; for various optical applications such as filters, diffraction gratings, prisms, and light guide elements; for optodevice applications such as photosensors, photoswitches, LEDs, light-emitting devices, optical waveguides, multiplexers, splitters, disconnecting switches, light fractionators, and optical fiber adhesives; for display device applications such as substrates for display devices such as LCDs, organic ELs, and PDPs, substrates for color filters, substrates for touchscreens, protective films for displays, display backlights, light-guide plates, antireflection films, and antifogging films; and applications that involve physical contact, such as touchscreens.

Among the applications listed above, the cured molded article of the present invention is particularly well adapted for application as an optical member. Thus, an embodiment in which this cured molded article is a cured molded article for optical applications is a preferred embodiment of the present invention. The cured molded article of the present invention is particularly preferably a cured molded article for lens service. The lens is preferably a camera lens, light-focusing lens, or light-diffusing lens and more preferably is a camera lens. Within the sphere of camera lenses, imaging lenses are preferred, e.g., the imaging lenses in portable telephones, the imaging lenses in digital cameras, and so forth. Microoptical lenses are also preferred.

The cured molded article is also preferably used as a transparent or transmissive sheet. This transparent or transmissive sheet can be exemplified by the protective sheets used for transmissive displays, where a high hardness is required. In addition, since this cured molded article has a high heat resistance, it supports an increase in the vapor deposition temperature and as a result makes it possible to enhance the properties of the vapor-deposited film. Because of this, the cured molded article can be used as a transmissive sheet for, e.g., photoselective sheets (for example, IRCF), light-transmissive electroconductive sheets (for example, the ITO films used in touchscreens), and so forth.

When the cured molded article is a cured molded article for optical applications, the previously described curable resin composition may contain additional components as appropriate in conformity to the application of the cured molded article for optical applications. Specifically, UV absorbents, IR cut agents, reactive diluents, pigments, cleansing agents, oxidation inhibitors, light stabilizers, plasticizers, nonreactive compounds, chain-transfer agents, thermal polymerization initiators, anaerobic polymerization initiators, light stabilizers, polymerization inhibitors, defoamants, and so forth, are suitable.

The process of the present invention for producing a cured molded article, because it has the structure described in the preceding, is an inexpensive production process that can provide a low shrinkage rate for the molded article during the primary cure. Accordingly, it can easily produce a transparent, discoloration-free cured molded article that exhibits an excellent heat resistance, abrasion resistance, and mold release behavior and that has a small shrinkage ratio. The cured molded article obtained by this production process is an organic/inorganic composite material that has a specific composition. Due to its manifestation of a high heat resistance, high hardness, and high transparency, this cured molded article is therefore well adapted for use in continuous service at elevated temperatures or with solder reflow, which service is considered to be highly problematic for conventional plastics; for use in robust applications, e.g., use in the outside environment; and particularly for use in lighting lenses. Thus, the production process of the present invention yields a cured molded article that exhibits, for example, a high abrasion resistance and heat resistance, to a degree that enables a well-adapted use even in outdoor-use applications and applications that involve physical contact; that exhibits an excellent transparency, dimensional accuracy, and ability to replicate a mold; and that is useful in a variety of applications, e.g., for optical elements and members.

BRIEF DESCRIPTION OF THE DRAWINGS

FIG. 1 shows the $^{29}$Si-NMR spectrum of the molded article obtained in Reference Example 1;
FIG. 2 shows the $^{29}$Si-NMR spectrum of the molded article obtained in Example 1-5;
FIG. 3 is a scanning electron micrograph of the molded article obtained in Example 1-5; and
FIG. 4 is a scanning electron micrograph of the molded article obtained in Comparative Example 5.

MODE(S) FOR CARRYING OUT THE INVENTION

The present invention is more particularly described using the examples provided below, but the present invention is not limited to only these examples. Unless specifically indicated otherwise, "parts" means "weight parts" and "%" means "mass%".

Production Example 1 (Resin composition (1))

The following were combined and were mixed to uniformity at 80°C: 9 g Celloxide 2021P (Daicel Chemical Industries, Ltd., alicyclic epoxy resin), 21 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L ((Sanshin Chemical Industry Co., Ltd., thermolatent cationic curing catalyst) was added and mixing to uniformity was carried out under reduced pressure.

Production Example 2 (Resin composition (2))

The following were combined and were mixed to uniformity at 80°C: 15 g Celloxide 2021P (Daicel Chemical Industries, Ltd., alicyclic epoxy resin), 15 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 3 (Resin composition (3))

The following were combined and were mixed to uniformity at 80°C: 21 g Celloxide 2021P (Daicel Chemical Industries, Ltd., alicyclic epoxy resin), 9 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 4 (Resin composition (4))

The following were combined and were mixed to uniformity at 80°C: 27 g Celloxide 2021P (Daicel Chemical Industries, Ltd., alicyclic epoxy resin), 3 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 5 (Resin composition (5))

The following were combined and were mixed to uniformity at 80°C: 28.5 g Celloxide 2021P (Daicel Chemical Industries, Ltd., alicyclic epoxy resin), 1.5 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 6 (Resin composition (6))

The following were combined and were mixed to uniformity at 80°C: 3 g Celloxide 2021P (Daicel Chemical Industries, Ltd., alicyclic epoxy resin), 27 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-80L (Sanshin Chemical Industry Co., Ltd.) was added and mixing to uniformity was carried out under reduced pressure.

Production Example 7 (Resin composition (7))

The following were combined and were mixed to uniformity at 80°C: 1.5 g Celloxide 2021P (Daicel Chemical Industries, Ltd., alicyclic epoxy resin), 28.5 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-80L (Sanshin Chemical Industry Co., Ltd.) was added and mixing to uniformity was carried out under reduced pressure.

Production Example 8 (Resin composition (8))

The following were combined and were mixed to uniformity at 80°C: 6 g Celloxide 2021P (Daicel Chemical Industries, Ltd., alicyclic epoxy resin), 24 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 9 (Resin composition (9))

The following were combined and were mixed to uniformity at 130°C: 4.5 g Celloxide 2021P (Daicel Chemical Industries, Ltd., alicyclic epoxy resin) and 4.5 g EHPE-3150 (Daicel Chemical Industries, Ltd., an alicyclic epoxy resin). This was followed by the addition of 21 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA) and mixing to uniformity at 80°C. After cooling to 40°C, 0.06 g SI-60L (Sanshin Chemical Industry Co., Ltd.) was added and mixing to uniformity was carried out under reduced pressure.

Production Example 10 (Resin composition (10))

The following were combined and were mixed to uniformity at 80°C: 5.1 g YX-8000 (Japan Epoxy Resin Co., Ltd., hydrogenated epoxy resin), 3.9 g Rikacid MH-700G (New Japan Chemical Co., Ltd., alicyclic acid anhydride), 21 g PMSQ-E (SR-13) (Konishi Chemical Ind. Co., Ltd., polymethylsilsesquioxane), 0.15 g stearic acid, and 0.15 g propylene glycol monomethyl ether acetate (PGMEA). After cooling to 40°C, 0.06 g 2E4MZ (Shikoku Chemicals Corporation, cure accelerator, 2-ethyl-4-methylimidazole) was added and mixing to uniformity was carried out under reduced pressure.

Production Example 11 (Resin composition (11))

The following were combined and were mixed to uniformity at 80°C: 9 g Celloxide 2021P (Daicel Chemical Industries, Ltd., alicyclic epoxy resin), 21 g PMPSQ-E (SR-3321) (Konishi Chemical Ind. Co., Ltd., polymethylphenylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Production Example 12 (Resin composition (12))

The following were combined and were mixed to uniformity at 80°C: 9 g Celloxide 2021P (Daicel Chemical Industries, Ltd., alicyclic epoxy resin), 21 g PPSQ-E (SR-23) (Konishi Chemical Ind. Co., Ltd., polyphenylsilsesquioxane), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Comparative Production Example 1 (Comparative resin composition (1))

The following were combined and were mixed to uniformity at 80°C: 30 g Celloxide 2021P (Daicel Chemical Industries, Ltd., alicyclic epoxy resin), 0.15 g stearic acid, and 0.15 g propylene glycol monomethyl ether acetate (PGMEA). After cooling to 40°C, 0.06 g SI-60L (Sanshin Chemical Industry Co., Ltd.) was added and mixing to uniformity was carried out under reduced pressure.

Comparative Production Example 2 (Comparative resin composition (2))

15 g Celloxide 2021P (Daicel Chemical Industries, Ltd., alicyclic epoxy resin) and 15 g EHPE-3150 (Daicel Chemical Industries, Ltd., alicyclic epoxy resin) were combined and were mixed to uniformity at 130°C. This was followed by the addition of 0.15 g stearic acid and 0.15 g propylene glycol monomethyl ether acetate (PGMEA) and mixing to uniformity at 80°C. After cooling to 40°C, 0.06 g SI-60L (Sanshin Chemical Industry Co., Ltd.) was added and mixing to uniformity was carried out under reduced pressure.

Comparative Production Example 3 (Comparative resin composition (3))

The following were combined and were mixed to uniformity at 80°C: 16.8 g YX-8000 (Japan Epoxy Resin Co., Ltd., hydrogenated epoxy resin), 13.2 g Rikacid MH-700G (New Japan Chemical Co., Ltd., alicyclic acid anhydride), 0.15 g stearic acid, and 0.15 g propylene glycol monomethyl ether acetate (PGMEA). After cooling to 40°C, 0.06 g 2E4MZ (Shikoku Chemicals Corporation, cure accelerator, 2-ethyl-4-methylimidazole) was added and mixing to uniformity was carried out under reduced pressure.

The viscosity was measured using the method described below on each of the resin compositions in Production Examples 1 to 12 and Comparative Production Examples 1 to 3. The results are shown in Table 1.

< Viscosity >

The viscosity was measured on the resin composition prior to the addition of the curing agent (SI-60L, SI-80L, or 2E4MZ). The measurement was carried out using an R/S Rheometer (Brookfield Engineering Laboratories, Inc. (US)) at 40°C and a rotation rate of D = 1/s. An RC25-1 measurement tool was used when the viscosity was 20 Pa·s or more, while an RC50-1 tool was used when the viscosity was less than 20 Pa·s. In those instances in which the viscosity could not be measured at a rotation rate of D = 1/s, the viscosity of the resin composition was evaluated by extrapolating the value at a rotation rate of D = 5 to 100/s.
[Table 1]

| | Name of resin composition | Components (unit. weight part) | | | | | | | | | | | | Viscosity Pa·s |
|---|---|---|---|---|---|---|---|---|---|---|---|---|---|---|
| | | CELL-2021P | EHPE-3150 | YX-8000 | Rikacid MH-700G | PMSQ-E | PMPSQ-E | PPSQ-E | PGMEA | Stearic acid | SI-60L | SI-80L | 2E4MZ | |
| Production Example 1 | Resin composition (1) | 30 | - | - | - | 70 | - | - | 0.5 | 0.5 | 0.2 | - | - | 9.3 |
| Production Example 2 | Resin composition (2) | 50 | - | - | - | 50 | - | - | 0.5 | 0.5 | 0.2 | - | - | 1.5 |
| Production Example 3 | Resin compostion (3) | 70 | - | - | - | 30 | - | - | 0.5 | 05 | 0.2 | - | - | 0.4 |
| Production Example 4 | Resin composition (4) | 90 | - | - | - | 10 | - | - | 0.5 | 0.5 | 0.2 | - | - | 0.2 |
| Production Example 5 | Resin composition (5) | 95 | - | - | - | 5 | - | - | 0.5 | 0.5 | 0.2 | - | - | less than 0.2 |
| Production Example 6 | Resin composition (6) | 10 | - | - | - | 90 | - | - | 0.5 | 0.5 | - | 0.2 | - | 250 |
| Production Example 7 | Resin composition (7) | 5 | - | - | - | 95 | - | - | 0.5 | 0.5 | - | 0.2 | - | 790 |
| Production Example 8 | Resin composition (8) | 20 | - | - | - | 80 | - | - | 0.5 | 0.5 | 0.2 | - | - | 28 |
| Production Example 9 | Resin composition (9) | 15 | 15 | - | - | 70 | - | - | 0.5 | 0.5 | 0.2 | - | - | 112 |

(continued)

| | Name of resin composition | Components (unit. weight part) | | | | | | | | | | | | Viscosity Pa·s |
|---|---|---|---|---|---|---|---|---|---|---|---|---|---|---|
| | | CELL-2021P | EHPE-3150 | YX-8000 | Rikacid MH-700G | PMSQ-E | PMPSQ-E | PPSQ-E | PGMEA | Stearic acid | SI-60L | SI-80L | 2E4MZ | |
| Production Example 10 | Resin composition (10) | - | - | 17 | 13 | 70 | - | - | 0.5 | 0.5 | - | - | 0.2 | 350 |
| Production Example 11 | Resin composition (11) | 30 | - | - | - | - | 70 | - | 0.5 | 0.5 | 0.2 | - | - | 6.9 |
| Production Example 12 | Resin composition (12) | 30 | - | - | - | - | - | 70 | 0.5 | 0.5 | 0.2 | - | - | 26 |
| Comparative Production Example 1 | Comparative resin composition (1) | 100 | - | - | - | - | - | - | 0.5 | 0.5 | 0.2 | - | - | less than 0.2 |
| Comparative Production Example 2 | Comparative resin composition (2) | 50 | 50 | - | - | - | - | - | 0.5 | 0.5 | 0.2 | - | - | 9.8 |
| Comparative Production Example 3 | Comparative resin composition (3) | - | - | 56 | 44 | - | - | - | 0.5 | 0.5 | 0.2 | - | - | 0.2 |

Example 1-1

(The first step)

A 1 mm-wide gap was formed using 2 sheets of SUS304 metal (Japan Testpanel Co., Ltd., #800 surface finish) and casting molding was performed using the resin composition (1) obtained in Production Example 1. Curing was carried out for 2 minutes with a 130°C mold followed by demolding.

(The second step)

After the first step cure, a curing process was run under the particular conditions given below under an $N_2$ atmosphere (unless specifically stated otherwise, this was run at an oxygen concentration of 0.2 to 0.3 volume%). condition: 1 hour/250°C (the sample was directly introduced into a 250°C dryer)
The following were evaluated on the resulting cured molded article using the measurement methods described below: transmittance, refractive index, Abbe number, surface hardness, and UV resistance. The results are given in Table 2.

< Transmittance >

Using an absorption spectrometer (UV-3100 spectrophotometer from Shimadzu Corporation), the transmittance of the cured material was measured at wavelengths of 400 nm and 500 nm.

< Evaluation of the refractive index and Abbe number >

The refractive index and Abbe number were measured using the following methods based on the methods in JIS K 7142.
Using a refractometer (DR-M2 from Atago Co., Ltd.), the refractive index of the previously described cured material (molded article with a thickness of 1 mm) was measured at 20°C using 486 nm, 589 nm, and 656 nm for the measurement wavelengths.
Using a refractometer (DR-M2 from Atago Co., Ltd.), the Abbe number of the previously described cured material (molded article with a thickness of 1 mm) was measured at 20°C.

< Surface hardness >

The measurement was carried out based on JIS-K 5600-5-4 (established 1999) using a pencil scratch hardness tester (Yasuda Seiki Seisakusho Ltd.). The load was 1,000 g.

< UV resistance (transmittance after UV resistance testing) >

The transmittance was measured (wavelengths of 400 nm and 500 nm) after 100 hours at 50°C and 1 kW/m$^2$ (300 to 400 nm) applied using an M6T (6 kW horizontal Metaling Weather Meter) from Suga Test Instruments Co., Ltd.

Examples 1-2 to 1-6

Curing processes were carried out that in each case were the same as in Example 1-1, with the following exceptions: the curing conditions in the second step in Example 1-2 were 6 hours at 250°C (temperature rise at 15°C/minute from room temperature); the curing conditions in the second step in Example 1-3 were 1 hour at 300°C (temperature rise at 15°C/minute from room temperature); the curing conditions in the second step in Example 1-4 were 6 hours at 300°C (temperature rise at 15°C/minute from room temperature); the curing conditions in the second step in Example 1-5 were 1 hour at 330°C (temperature rise at 15°C/minute from room temperature); and the curing conditions in the second step in Example 1-6 were 10 minutes at 350°C (temperature rise at 15°C/minute from room temperature). In addition, after curing, the molded article was cooled to 150°C or below (temperature reduction at about 5°C/minute from the maximum temperature) and was opened up in the air. Each of the resulting cured molded articles was evaluated as in Example 1-1. The results are given in Table 2.

Example 1-7

A curing process was carried out as in Example 1-1, except that the curing conditions in the second step were 1 hour at 300°C (temperature rise at 15°C/minute from room temperature) in an $N_2$ atmosphere (5 volume% oxygen concentration). The obtained cured molded article was evaluated as in Example 1-1. The results are given in Table 2.

Reference Example 1

A curing process was carried out as in Example 1-1, with the exception that the second step was not performed (curing process consisting of only the first step). The resulting cured material was evaluated as in Example 1-1. The results are shown in Table 2.
[Table 2]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Reference Example 1 | First step only | Resin composition (1) | 90.1 | 92.0 | 1.450 | 60.9 | F | 78.4 | 88.7 |
| Example 1-1 | First + Second step (250° C × 1 hr.) | Resin composition (1) | 89.2 | 91.2 | 1.442 | 59.7 | H | 85.5 | 89.1 |
| Example 1-2 | First + Second step (250° C × 6 hrs.) | Resin composition (1) | 89.1 | 90.9 | 1.436 | 58.1 | 5H | 86.2 | 90.9 |
| Example 1-3 | First + Second step (300° C × 1 hr.) | Resin composition (1) | 88.8 | 91.1 | 1.436 | 58.9 | 5H | 88.4 | 90.9 |
| Example 1-4 | First + Second step (300° C × 6 hrs.) | Resin composition (1) | 86.1 | 91.1 | 1.431 | 59.1 | 7H or more | 85.8 | 90.8 |
| Example 1-5 | First + Second step (330° C × hr.) | Resin composition (1) | 82.0 | 90.8 | 1.435 | 59.7 | 7H or more | 81.5 | 90.7 |
| Example 1-6 | First + Second step (350° C × 10 min.) | Resin composition (1) | 85.8 | 91.0 | 1.431 | 60.7 | 7H or more | 85.4 | 90.9 |
| Example 1-7 | First + Second step (300° C × 1 hr.) Oxygen concentration: 5% | Resin composition (1) | 61.5 | 82.1 | - | - | 2H | - | - |

Example 2 and Reference Example 2

In Examples 2-1, 2-2, 2-3, 2-4, and 2-5 and Reference Example 2, the curing process was performed as in, respectively, Examples 1-1, 1-3, 1-5, 1-6, and 1-7 and Reference Example 1, with the exception that resin composition (2) obtained in Production Example 2 was used in the former in place of the resin composition (1) obtained in Production Example 1. Each of the resulting cured molded articles was evaluated as in Example 1-1. The results are given in Table 3.
[Table 3]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Reference Example 2 | First step only | Resin composition (2) | 87.8 | 89.2 | - | - | H | - | - |
| Example 2-1 | First + Second step (250° C × 1 hr.) | Resin composition (2) | 81.0 | 87.2 | 1.461 | 56.3 | H | 75.1 | 86.9 |
| Example 2-2 | First + Second step (300° C × 1 hr.) | Resin composition (2) | 81.0 | 87.3 | - | - | 4H | 71.7 | 86.9 |
| Example 2-3 | First + Second step (330° C × 1 hr.) | Resin composition (2) | 48.4 | 82.4 | - | - | 4H | - | - |
| Example 2-4 | First + Second step (350° C × 10 min.) | Resin composition (2) | 64.2 | 83.7 | 1.453 | 56.0 | 5H | - | - |
| Example 2-5 | First + Second step (300° C × 1 hr.) Oxygen concentration: 5% | Resin composition (2) | 33.7 | 72.5 | - | - | 2H | - | - |

Example 3 and Reference Example 3

In Examples 3-1, 3-2, 3-3, 3-4, and 3-5 and Reference Example 3, the curing process was performed as in, respectively, Examples 1-1, 1-3, 1-5, 1-6, and 1-7 and Reference Example 1, with the exception that resin composition (3) obtained in Production Example 3 was used in the former in place of the resin composition (1) obtained in Production Example 1. Each of the resulting cured molded articles was evaluated as in Example 1-1. The results are given in Table 4.
[Table 4]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Reference Example 3 | First step only | Resin composition (3) | 85.5 | 88.3 | 1.491 | 57.7 | 2H | - | - |
| Example 3-1 | First + Second step (250° C × 1 hr.) | Resin composition (3) | 82.6 | 88.1 | 1.483 | 56.3 | 3H | 65.7 | 85.1 |
| Example 3-2 | First + Second step (300° C × 1 hr.) | Resin composition (3) | 61.2 | 86.7 | - | - | 3H | 48.4 | 83.3 |
| Example 3-3 | First + Second step (330° C × 1 hr.) | Resin composition (3) | 14.3 | 74.6 | - | - | 4H | - | - |
| Example 3-4 | First + Second step C × 10 min.) | Resin composition (3) | 33.0 | 81.1 | 1.477 | 56.1 | 4H | - | - |
| Example 3-5 | First + Second step (300° C × 1 hr.) Oxygen concentration: 5% | Resin composition (3) | 23.8 | 65.5 | - | - | 2H | - | - |

Examples 4 to 12 and Reference Examples 4 to 12

In Examples 4-1, 5-1, 6-1, 7-1, 8-1, 9-1, and 11-1, the curing process was performed as in Example 1-1, with the exception that in each case the resin composition shown in Tables 5 and 6 was used in place of resin composition (1). In Examples 4-2, 5-2, 6-2, 7-2, 8-2, 9-2, and 11-2, the curing process was performed as in Example 1-6, with the exception that in each case the resin composition shown in Tables 5 and 6 was used in place of resin composition (1). In Reference Examples 4 to 9 and 11, the curing process was carried out as in Reference Example 1, with the exception that in each case the resin composition shown in Tables 5 and 6 was used in place of resin composition (1).

In Example 10-1, a curing process was performed as in Example 1-1, with the exception that resin composition (10) was used in place of resin composition (1) and 1 hour at 140°C was used for the curing conditions in the first step. In Example 10-2, a curing process was carried out as in Example 1-6, with the exception that resin composition (10) was used in place of resin composition (1) and 1 hour at 140°C was used for the curing conditions in the first step. In Reference Example 10, a curing process was run as in Reference Example 1, with the exception that resin composition (10) was used in place of resin composition (1) and 1 hour at 140°C was used for the curing conditions in the first step.

In Example 12-1, a curing process was performed as in Example 1-1, with the exception that resin composition (12) was used in place of resin composition (1) and 1 hour at 150°C was used for the curing conditions in the first step. In Example 12-2, a curing process was carried out as in Example 1-6, with the exception that resin composition (12) was used in place of resin composition (1) and 1 hour at 150°C was used for the curing conditions in the first step. In Reference Example 12, a curing process was run as in Reference Example 1, with the exception that resin composition (12) was used in place of resin composition (1) and 1 hour at 150°C was used for the curing conditions in the first step.

Each of the resulting cured molded articles was evaluated as in Example 1-1. The results are given in Tables 5 and 6. In the examples that used resin compositions (6) and (7) (Examples 6-1, 6-2, 7-1, 7-2 and Reference Examples 6 and 7), bubbles were produced in the cured article during the curing process in the first step and as a consequence the physical properties were measured at a location where bubbles had not been produced.

[Table 5]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Preference Example 4 | First step only | Resin composition (4) | 89.4 | 89.9 | - | - | 2H | - | - |
| Example 4-1 | First + Second step (250° C × 1 hr.) | Resin composition (4) | 84.4 | 87.8 | - | - | 3H | - | - |
| Example 4-2 | First + Second step (350° C × 10 min.) | Resin composition (4) | 23.9 | 84.4 | - | - | 4H | - - | - - |
| Reference Example 5 | First step only | Resin composition (5) | 89.1 | 89.5 | - | - | 2H | - | - |
| Example 5-1 | First + Second step (250° C × 1 hr.) | Resin composition (5) | 83.7 | 90.1 | - | - | 3H | - | - |
| Example 5-2 | First + Second step (350° C × 10 min.) | Resin composition (5) | 16.8 | 82.5 | - | - | 4H | - | - |
| Reference Example 6 | First step only | Resin composition (6) | 90% or more | 90% or more | - | - | 2H | - | - |

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Example 6-1 | First + Second step (250° C × 1 hr.) | Resin composition (6) | 88% or more | 90% or more | - | - | - | - | - |
| Example 6-2 | First + Second step (350° C × 10 min.) | Resin composition (6) | 88% or more | 90% or more | - | - | 7H or more | - | - |
| Reference Example 7 | First step only | Resin composition (7) | 90% or more | 90% or more | - | - | 2H | - | - |
| Example 7-1 | First + Second step (250° C × 1 hr.) | Resin composition (7) | 88% or more | 90% or more | - | - | - | - | - |
| Example 7-2 | First + Second step (350° C × 10 min.) | Resin composition (7) | 88% or more | 90% or more | - | - | 7H or more | - | - |
| Reference Example 8 | First step only | Resin composition (8) | 90.0 | 91.2 | 1.446 | 58.6 | HB | - | - |
| Example 8-1 | First + Second step (250° C × 1 hr.) | Resin composition (8) | 88.9 | 90.8 | 1.431 | 59.2 | 5H | - | - |

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Example 8-2 | First + Second step (350° C × 10 min.) | Resin composition (8) | 87.7 | 90.5 | 1.420 | 60.0 | 7H or more | 87.5 | 90.4 |

[Table 6]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Reference Example 9 | First step only | Resin composition (9) | 87.4 | 89.0 | 1.470 | 54.0 | 2H | - | - |
| Example 9-1 | First + Second step (250° C × 1 hr.) | Resin composition (9) | 86.3 | 88.9 | 1.446 | 56.4 | 7H or more | - | - |
| Example 9-2 | First + Second step (350° C × 10 min.) | Resin composition (9) | 85.8 | 88.7 | 1.434 | 54.9 | 7H or more | 76.1 | 87.9 |
| Reference Example 10 | First step only (140° C × 1 hr.) | Resin composition (10) | 43.7 | 55.7 | - | - | 6B | - | - |
| Example 10-1 | First + Second step (250° C × 1 hr.) | Resin composition (10) | 30.7 | 46.8 | - | - | 4H | - | - |
| Example 10-2 | First + Second step (350° C × 10 min.) | Resin composition (10) | 1.8 | 31.7 | - | - | 6H | - | - |
| Reference Example 11 | First step only | Resin composition (11) | 85.7 | 89.8 | 1.510 | 42.1 | 2B | - | - |

(continued)

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Example 11-1 | First + Second step (250° C × 1 hr.) | Resin composition (11) | 85.4 | 89.5 | 1.497 | 42.5 | 3H | - | - |
| Example 11-2 | First + Second step (350° C × 10 min.) | Resin composition (11) | 85.1 | 88.9 | 1.486 | 42.3 | 5H | 75.8 | 87.8 |
| Reference Example 12 | First step only (150° C × 1 hr.) | Resin composition (12) | 82.1 | 88.9 | 1.551 | 37.0 | H | - | - |
| Example 12-1 | First + Second step (250° C × 1 hr.) | Resin composition (12) | 79.2 | 88.1 | 1.549 | 35.7 | H | - | - |
| Example 12-2 | First + Second step (350° C × 10 min.) | Resin composition (12) | 78.1 | 87.8 | 1.548 | 34.5 | 2H | 71.2 | 85.3 |

Comparative Examples 1 and 2 and Comparative Reference Examples 1 and 2

In Comparative Examples 1-1 and 2-1, the curing processes were carried out as in Example 1-1, with the exception that the resin composition shown in Table 7 was in each case used in place of resin composition (1). In Comparative Examples 1-2 and 2-2, the curing processes were carried out as in Example 1-6, with the exception that the resin composition shown in Table 7 was used in place of resin composition (1). In Comparative Reference Examples 1 and 2, the curing processes were run as in Reference Example 1, with the exception that the resin composition shown in Table 7 was in each case used in place of resin composition (1). The resulting cured molded articles were each evaluated as in Example 1-1. The results are given in Table 7.

Comparative Example 3-1

(The first step)

A 1 mm-wide gap was formed using 2 sheets of SUS304 metal (Japan Testpanel Co., Ltd., #800 surface finish) and casting molding was performed using the comparative resin composition (3) obtained in Comparative Production Example 3. Curing was carried out for 1 hour with a 140°C mold followed by demolding.

(The second step)

After the first step cure, a curing process was run as in Example 1-1, and the resulting cured molded article was then evaluated as in Example 1-1. The results are shown in Table 7.

Comparative Example 3-2

The curing process was run as in Comparative Example 3-1, with the exception that 10 minutes at 350°C (15°C/minute temperature rise from room temperature) was used for the curing conditions in the second step. The resulting cured molded article was evaluated as in Example 1-1. The results are given in Table 7.

Comparative Reference Example 3

A curing process was run as in Comparative Example 3-1, with the exception that the second step was not implemented (the curing process consisted of only the first step). The resulting cured material was evaluated as in Example 1-1. The results are given in Table 7.

[Table 7]

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Comparative Reference Example 1 | First step only | Comparative resin composition (1) | 89.1 | 89.5 | 1.523 | 60.1 | 2H | - | - |
| Comparative Example 1-1 | First + Second step (250° C × 1 hr.) | Comparative resin composition (1) | 82.3 | 88.7 | 1.521 | 58.9 | 4H | 50.3 | 79.6 |
| Comparative Example 1-2 | First + Second step (350° C × 10 min.) | Comparative resin composition (1) | 13.5 | 81.0 | 1.519 | 54.6 | 4H | 7.5 | 61.3 |
| Comparative Reference Example 2 | First step only | Comparative resin composition (2) | 87.2 | 91.1 | 1.517 | 56.8 | 2H | - | - |
| Comparative Example 2-1 | First + Second step (250° C × 1 hr.) | Comparative resin composition (2) | 77.5 | 90.2 | 1.513 | 57.2 | 4H | 63.3 | 84.5 |
| Comparative Example 2-2 | First + Second step (350° C × 10 min.) | Comparative resin composition (2) | 0.1 | 64.7 | 1.5212 | 52.1 | 3H | - | - |
| Comparative Reference Example 3 | First step only (140° C × 1 hr.) | Comparative resin composition (3) | 80.0 | 90.3 | 1.507 | 59.6 | H | 76.7 | 90.1 |

| | | Name of resin composition | Transmittance (%, at 400 nm) | Transmittance (%, at 500 nm) | Refractive index (at 589 nm) | Abbe number | Pencil hardness | Transmittance after UV resistance testing (%, at 400 nm) | Transmittance after UV resistance testing (%, at 500 nm) |
|---|---|---|---|---|---|---|---|---|---|
| Comparative Example 3-1 | First + Second step (250° C × 1 hr.) | Comparative resin composition (3) | 49.4 | 80.4 | 1.504 | 54.2 | H | - | - |
| Comparative Example 3-2 | First + Second step (350° C × 10 min.) | Comparative resin composition (3) | 0.1 | 8.1 | 1.504 | - | H | - | - |

Comparative Example 4

A curing process was run at 250°C on resin composition (1) obtained in Production Example 1. When this was done, foaming occurred due to the production of water vapor and numerous bubbles were produced in the cured article.

Production Example 13 (Resin composition (13))

The following were combined and were mixed to uniformity at 80°C: 9 g Celloxide 2021P (Daicel Chemical Industries, Ltd., alicyclic epoxy resin), 21 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Production Example 14 (Resin composition (14))

The following were combined and were mixed to uniformity at 80°C: 9 g Celloxide 3000 (Daicel Chemical Industries, Ltd., alicyclic epoxy resin), 21 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Production Example 15 (Resin composition (15))

The following were combined and were mixed to uniformity at 80°C: 15 g Celloxide 2021P (Daicel Chemical Industries, Ltd., alicyclic epoxy resin), 15 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Production Example 16 (Resin composition (16))

The following were combined and were mixed to uniformity at 80°C: 21 g Celloxide 2021P (Daicel Chemical Industries, Ltd., alicyclic epoxy resin), 9 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Production Example 17 (Resin composition (17))

The following were combined and were mixed to uniformity at 80°C: 10 g Celloxide 2021P (Daicel Chemical Industries, Ltd., alicyclic epoxy resin), 10 g Celloxide 2081 (Daicel Chemical Industries, Ltd., alicyclic epoxy resin), 10 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Production Example 18 (Resin composition (18))

The following were combined and were mixed to uniformity at 80°C: 6 g Celloxide 3000 (Daicel Chemical Industries, Ltd., alicyclic epoxy resin), 24 g Aron Oxetane OXT221 (Toagosei Co., Ltd., oxetane resin), 70 g PMSQ-E (SR-13) (Konishi Chemical Ind. Co., Ltd., polymethylsilsesquioxane), and 0.5 g stearic acid. After cooling to 40°C, a mixture of 0.2 g SI-60L (Sanshin Chemical Industry Co., Ltd.) and 0.5 g propylene glycol monomethyl ether acetate (PGMEA) was added and mixing to uniformity was carried out under reduced pressure.

Examples 13 to 18

Curing processes were run as in Example 1-5 on the resin compositions (13) to (18) obtained in Production Examples 13 to 18. For each of the obtained cured molded articles, the transmittance and surface hardness were evaluated by the same evaluation methods as used in Example 1-1, while the water absorption rate and resistance to wet heat were evaluated by the methods described below. The results are shown in Table 8. The evaluation results for Example 1-5 are also given for reference.

< The water absorption rate >

Approximately 2 g of the cure article was introduced into a 50°C convection dryer and was dried for 24 hours, after which the weight was measured. This was followed by immersion for 24 hours in 200 g pure water at 25°C, after which the water on the surface was wiped off and the weight was measured. The water absorption rate was calculated from the weight increment.

< The resistance to wet heat >

A wet heat test was run by holding the cured article for 500 hours in a thermostat/humidistat (ESPEC Corporation, SH-221 environmental tester, test conditions: 85°C, 85% RH). The transmittance at a wavelength of 400 nm was measured on the cured article after the wet heat test, and the percentage decline in the transmittance (400 nm) due to the wet heat test was calculated.
[Table 8]

| | Name of resin composition | Components (unit: weight part) | | | | | Transmittance (%, at 400 nm) | Surface hardness | Water absorption rate (%) | Decline in the transmittance after wet heat test (%) |
|---|---|---|---|---|---|---|---|---|---|---|
| | | Celloxide 2021P | PMSQ-E | Celloxide 2081 | Celloxide 3000 | Aron Oxetane OXT221 (DOX) | | | | |
| Examples 1 to 5 | Resin composition (1) | 30 | 70 | - | - | - | 82.0 | 7H or more | 1.4 | 16.0 |
| Example 13 | Resin composition (13) | 9 | 70 | - | - | 21 | 87.3 | 7H or more | 0.4 | 2.1 |
| Example 14 | Resin composition (14) | - | 70 | - | 9 | 21 | - | 7H or more | 0.2 | - |
| Example 15 | Resin composition (15) | 15 | 70 | - | - | 15 | 85.1 | 7H or more | 0.8 | - |
| Example 16 | Resin composition (16) | 21 | 70 | - | - | 9 | 85.1 | 7H or more | 1.0 | - |
| Example 17 | Resin composition (17) | 10 | 70 | 10 | - | 10 | 86.7 | 7H or more | 0.8 | 5.4 |
| Example 18 | Resin composition (18) | - | 70 | - | 6 | 24 | - | 7H or more | 0.2 | - |

Examples 19 to 25

The additives indicated in Table 9 were added at from 0.1 to 0.5%, with reference to the weight of the resin composition, to the resin composition (1) obtained in Production Example 1 and a curing process was run as in Example 1-5. Each of the resulting cured molded articles was subjected to an evaluation of the transmittance and surface hardness using the same evaluation methods as in Example 1-1 and to an evaluation of the wet heat resistance using the evaluation method described above. The results are given in Table 9. The evaluation results for Example 1-5 are also given for reference.

[Table 9]

| | Name of resin composition | Resin component (weight part) | | Additives (%) | | | | | | Transmittance (%, at 400 nm) | Surface hardness | Decline in the transmittance after wet heat test (%) |
|---|---|---|---|---|---|---|---|---|---|---|---|---|
| | | Celloxide 2021P | PMSQ-E | Tinuvin 384-2 | Tinuvin 1130 | Tinuvin P | Tinuvin 329 | IRGANOX 1010 | SUMILIZER GS | | | |
| Examples 1 to 5 | Resin (1) composition | 30 | 70 | No additives | | | | | | 82.0 | 7H or more | 16.0 |
| Example 19 | Resin composition (1) | 30 | 70 | 0.1 | - | - | - | - | - | 78.0 | 7H or more | 10.1 |
| Example 20 | Resin composition (1) | 30 | 70 | - | 0.1 | - | - | - | - | 79.2 | 7H or more | 13.0 |
| Example 21 | Resin composition (1) | 30 | 70 | - | - | 0.3 | - | - | - | 75.4 | 7H or more | 13.9 |
| Example 22 | Resin composition (1) | 30 | 70 | - | - | - | 0.3 | - | - | 76.2 | 7H or more | 10.0 |
| Example 23 | Resin composition (1) | 30 | 70 | - | - | - | - | - | 0.5 | 80.7 | 7H or more | 11.5 |
| Example 24 | Resin composition (1) | 30 | 70 | - | - | - | - | 0.5 | - | 85.6 | 7H or more | 11.8 |
| Example 25 | resin composition (1) | 30 | 70 | - | 0.3 | - | - | - | - | 71.7 | 7H or more | 9.7 |

Production Example 19 (Resin composition (19))

300 g methyltrimethoxysilane (Z-6366 from Dow Corning Toray Co., Ltd.) was introduced into a 500-mL separable flask equipped with a reflux condenser and a thermometer for measurement of the internal temperature and stirring was carried out at an internal temperature of 25°C. While maintaining the internal temperature at 25°C, 30.46 g formic acid was introduced and stirring was performed for 10 minutes. While maintaining the internal temperature at 25°C, 60.75 g water was added and stirring was performed for 10 minutes. This was followed by heating and stirring for 1 hour at an internal temperature of 50°C. After this, the reflux condenser was removed from the separable flask and, in order to perform distillation at normal pressure, the separable flask was then fitted with a distillation head that was fitted with a thermometer and had a solvent trap. 30 g methyl isobutyl ketone was introduced and the temperature in the reaction system was raised using a 90°C oil bath while stirring. After the thermometer (distillate temperature) at the distillation head had reached 66°C, the oil bath was removed in order to stop the distillation at the point at which the internal temperature had reached 79°C and the amount of distillate had reached 195 g and the temperature was lowered using a water bath. 63.25 g alicyclic epoxy resin (CELL-2021P from Daicel Chemical Industries, Ltd.) was introduced at an internal temperature of 50°C and, while stirring, solvent was distilled out at reduced pressure for 30 minutes at 50°C and 10 kPa. After this, solvent was distilled out at reduced pressure for 30 minutes at 50°C and 1 kPa while stirring. The temperature was then raised and solvent was distilled out at reduced pressure for 30 minutes at 1 kPa and 80°C while stirring. 1.05 g stearic acid was added and the solvent was stirred for 15 minutes under reduced pressure at 1 kPa and 80°C. While stirring under reduced pressure, the temperature was lowered and 1.05 g propylene glycol monomethyl ether acetate and 0.42 g thermolatent cationic polymerization initiator (SI-60L from Sanshin Chemical Industry Co., Ltd.) were introduced at 40°C, and stirring was carried out for 30 minutes under reduced pressure to obtain 229.8 g of a resin composition (19). The weight-average molecular weight of the material containing the inorganic component (metalloxane component) was 11,000, and the molecular weight of the organic component (organic resin component) was 100.

Production Example 20 (Resin composition (20))

25 g methyltrimethoxysilane (Z-6366 from Dow Corning Toray Co., Ltd.) and 36.5 g phenyltrimethoxysilane (KBM-103 from Shin-Etsu Chemical Co., Ltd.) were introduced into a 500-mL separable flask equipped with a reflux condenser and a thermometer for measurement of the internal temperature and stirring was carried out at an internal temperature of 25°C. Stirring was performed for 10 minutes and it was confirmed that uniformity had been reached, after which 5.08 g formic acid was introduced and stirring was performed for 10 minutes while maintaining the internal temperature at 25°C. While maintaining the internal temperature at 25°C, 13.25 g water was added and stirring was performed for 10 minutes. This was followed by heating and stirring for 1 hour at an internal temperature of 50°C. After this, the reflux condenser was removed from the separable flask and, in order to perform distillation at normal pressure, the separable flask was then fitted with a distillation head that was fitted with a thermometer and had a solvent trap. 6 g methyl isobutyl ketone was introduced and the temperature in the reaction system was raised using a 90°C oil bath while stirring. After the thermometer (distillate temperature) at the distillation head had reached 67°C, the oil bath was removed in order to stop the distillation when the internal temperature was 88°C and the thermometer at the distillation head had dropped to 60°C and the temperature was lowered using a water bath. 15.5 g alicyclic epoxy resin (CELL-2021P from Daicel Chemical Industries, Ltd.) was introduced at an internal temperature of 50°C and, while stirring, solvent was distilled out at reduced pressure for 20 minutes at 50°C and 10 kPa. After this, solvent was distilled out at reduced pressure for 20 minutes at 50°C and 1 kPa while stirring. The temperature was then raised and solvent was distilled out at reduced pressure for 20 minutes at 1 kPa and 80°C while stirring. 0.26 g stearic acid was added and the solvent was stirred for 10 minutes under reduced pressure at 1 kPa and 80°C. While stirring under reduced pressure, the temperature was lowered and 0.26 g propylene glycol monomethyl ether acetate and 0.103 g thermolatent cationic polymerization initiator (SI-60L from Sanshin Chemical Industry Co., Ltd.) were introduced at 40°C, and stirring was carried out for 30 minutes under reduced pressure to obtain 54.5 g of a resin composition (20). The weight-average molecular weight of the material containing the inorganic component was 1,700, and the weight-average molecular weight of the organic component was 100.

Production Example 21 (Resin composition (21))

13 g methyltrimethoxysilane (Z-6366 from Dow Corning Toray Co., Ltd.), 37.9 g phenyltrimethoxysilane (KBM-103 from Shin-Etsu Chemical Co., Ltd.), and 19.9 g tetraethoxysilane (Z-6697 from Dow Corning Toray Co., Ltd.) were introduced into a 500-mL separable flask equipped with a reflux condenser and a thermometer for measurement of the internal temperature and stirring was carried out at an internal temperature of 25°C. Stirring was performed for 10 minutes and it was confirmed that uniformity had been reached, after which 5.28 g formic acid was introduced and stirring was performed for 10 minutes while maintaining the internal temperature at 25°C. While maintaining the internal temperature at 25°C, 11.7 g water was added and stirring was performed for 10 minutes. This was followed by heating and stirring for 1 hour at an internal temperature of 50°C. After this, the reflux condenser was removed from the separable flask and, in order to perform distillation at normal pressure, the separable flask was then fitted with a distillation head that was fitted with a thermometer and had a solvent trap. 7 g methyl isobutyl ketone was introduced and the temperature in the reaction system was raised using a 90°C oil bath while stirring. After the thermometer (distillate temperature) at the distillation head had reached 69°C, the oil bath was removed in order to stop the distillation when the internal temperature was 87°C and the thermometer at the distillation head had dropped to 55°C and the temperature was lowered using a water bath. 15.8 g alicyclic epoxy resin (CELL-2021P from Daicel Chemical Industries, Ltd.) was introduced at an internal temperature of 50°C and, while stirring, solvent was distilled out at reduced pressure for 20 minutes at 50°C and 10 kPa. After this, solvent was distilled out at reduced pressure for 20 minutes at 50°C and 1 kPa while stirring. The temperature was then raised and solvent was distilled out at reduced pressure for 20 minutes at 1 kPa and 80°C while stirring. 0.26 g stearic acid was added and the solvent was stirred for 10 minutes under reduced pressure at 1 kPa and 80°C. While stirring under reduced pressure, the temperature was lowered and 0.26 g propylene glycol monomethyl ether acetate and 0.106 g thermolatent cationic polymerization initiator (SI-60L from Sanshin Chemical Industry Co., Ltd.) were introduced at 40°C, and stirring was carried out for 30 minutes under reduced pressure to obtain 57.2 g of a resin composition (21).

Production Example 22 (Resin composition (22))

13 g methyltrimethoxysilane (Z-6366 from Dow Corning Toray Co., Ltd.), 37.9 g phenyltrimethoxysilane (KBM-103 from Shin-Etsu Chemical Co., Ltd.), and 11.5 g dimethyldimethoxysilane (Z-6329 from Dow Corning Toray Co., Ltd.) were introduced into a 500-mL separable flask equipped with a reflux condenser and a thermometer for measurement of the internal temperature and stirring was carried out at an internal temperature of 25°C. Stirring was performed for 10 minutes and it was confirmed that uniformity had been reached, after which 5.28 g formic acid was introduced and stirring was performed for 10 minutes while maintaining the internal temperature at 25°C. While maintaining the internal temperature at 25°C, 10.3 g water was added and stirring was performed for 10 minutes. This was followed by heating and stirring for 1 hour at an internal temperature of 50°C. After this, the reflux condenser was removed from the separable flask and, in order to perform distillation at normal pressure, the separable flask was then fitted with a distillation head that was fitted with a thermometer and had a solvent trap. 7 g methyl isobutyl ketone was introduced and the temperature in the reaction system was raised using a 90°C oil bath while stirring. After the thermometer (distillate temperature) at the distillation head had reached 65°C, the oil bath was removed in order to stop the distillation when the thermometer at the distillation head had dropped to 58°C and the temperature was lowered using a water bath. 16.4 g alicyclic epoxy resin (CELL-2021P from Daicel Chemical Industries, Ltd.) was introduced at an internal temperature of 50°C and, while stirring, solvent was distilled out at reduced pressure for 20 minutes at 50°C and 10 kPa. After this, solvent was distilled out at reduced pressure for 20 minutes at 50°C and 1 kPa while stirring. The temperature was then raised and solvent was distilled out at reduced pressure for 20 minutes at 1 kPa and 80°C while stirring. 0.26 g stearic acid was added and the solvent was stirred for 10 minutes under reduced pressure at 1 kPa and 80°C. While stirring under reduced pressure, the temperature was lowered and 0.26 g propylene glycol monomethyl ether acetate and 0.105 g thermolatent cationic polymerization initiator (SI-60L from Sanshin Chemical Industry Co., Ltd.) were introduced at 40°C, and stirring was carried out for 30 minutes under reduced pressure to obtain 57.3 g of a resin composition (22).

Production Example 23 (Resin composition (23))

15 g methyltrimethoxysilane (Z-6366 from Dow Corning Toray Co., Ltd.), 43.7 g phenyltrimethoxysilane (KBM-103 from Shin-Etsu Chemical Co., Ltd.), and 27.2 g 2-(3,4-epoxycyclohexyl)ethyltrimethoxysilane (KBM-303 from Shin-Etsu Chemical Co., Ltd.) were introduced into a 500-mL separable flask equipped with a reflux condenser and a thermometer for measurement of the internal temperature and stirring was carried out at an internal temperature of 25°C. Stirring was performed for 10 minutes and it was confirmed that uniformity had been reached, after which 6.1 g formic acid was introduced and stirring was performed for 10 minutes while maintaining the internal temperature at 25°C. While maintaining the internal temperature at 25°C, 11.4 g water was added and stirring was performed for 10 minutes. This was followed by heating and stirring for 1 hour at an internal temperature of 50°C. After this, the reflux condenser was removed from the separable flask and, in order to perform distillation at normal pressure, the separable flask was then fitted with a distillation head that was fitted with a thermometer and had a solvent trap. 7 g methyl isobutyl ketone was introduced and the temperature in the reaction system was raised using a 90°C oil bath while stirring. After the thermometer (distillate temperature) at the distillation head had reached 65°C, the oil bath was removed in order to stop the distillation when the internal temperature was 90°C and the thermometer at the distillation head had dropped to 58°C and the temperature was lowered using a water bath. 23.6 g alicyclic epoxy resin (CELL-2021P from Daicel Chemical Industries, Ltd.) was introduced at an internal temperature of 50°C and, while stirring, solvent was distilled out at reduced pressure for 30 minutes at 50°C and 10 kPa. After this, solvent was distilled out at reduced pressure for 30 minutes at 50°C and 1 kPa while stirring. The temperature was then raised and solvent was distilled out at reduced pressure for 30 minutes at 1 kPa and 80°C while stirring. 0.39 g stearic acid was added and the solvent was stirred for 10 minutes under reduced pressure at 1 kPa and 80°C. While stirring under reduced pressure, the temperature was lowered and 0.39 g propylene glycol monomethyl ether acetate and 0.16 g thermolatent cationic polymerization initiator (SI-60L from Sanshin Chemical Industry Co., Ltd.) were introduced at 40°C, and stirring was carried out for 30 minutes under reduced pressure to obtain 88.1 g of a resin composition (23).

Production Example 24 (Resin composition (24))

The following were combined and were mixed to uniformity at 80°C: 3.6 g Celloxide 2021P (Daicel Chemical Industries, Ltd., Alicyclic epoxy resin), 8.4 g PMSQ-E (SR-13) (Konishi Chemical Ind. Co., Ltd., polymethylsilsesquioxane), 0.06 g stearic acid, and 0.06 g propylene glycol monomethyl ether acetate (PGMEA). After cooling to 40°C, 0.024 g CPI-101A (photocationic polymerization catalyst, San-Apro Ltd.) was added and mixing to uniformity was carried out under reduced pressure.

Production Example 25 (Resin composition (25))

The following were combined and were mixed to uniformity at 80°C: 0.46 g DPE-6A (Light Acrylate Co., Ltd., hexaacrylate of dipentaerythritol), 1.84 g SR-502 (Sartomer Company Incorporated, TMS-9 EO adduct triacrylate), 2.3 g ADMA (Osaka Organic Chemical Industry Ltd., 1-adamantyl methacrylate), 10.73 g PMPSQ-E (SR-3321) (Konishi Chemical Ind. Co., Ltd., polymethylphenylsilsesquioxane), 0.074 g stearic acid, and 0.074 g propylene glycol monomethyl ether acetate (PGMEA). After cooling to 40°C, 0.148 g Peroyl L (Nippon Oil & Fats Co., Ltd. (now NOF Corporation), initiator) was added and mixing to uniformity was carried out under reduced pressure.

Production Example 26 (Resin composition (26))

The following were combined and were mixed to uniformity at 80°C: 0.563 g DPE-6A (Light Acrylate Co., Ltd., hexaacrylate of dipentaerythritol), 2.252 g SR-502 (Sartomer Company Incorporated, TMS-9 EO adduct triacrylate), 2.815 g ADMA (Osaka Organic Chemical Industry Ltd., 1-adamantyl methacrylate), 13.14 g PMPSQ-E (SR-3321) (Konishi Chemical Ind. Co., Ltd., polymethylphenylsilsesquioxane), 0.094 g stearic acid, and 0.094 g propylene glycol monomethyl ether acetate (PGMEA). After cooling to 40°C, 0.188 g Irgacure 184 (Ciba-Geigy, initiator) was added and mixing to uniformity was carried out under reduced pressure.

Comparative Production Example 4 (Comparative Resin Composition (4))

168 g hydrogenated bisphenol A (Japan Epoxy Resin Co., Ltd., Epikote YX-8000, epoxy equivalent weight = 205, liquid hydrogenated epoxy resin) and 240 g organosilica sol (Nissan Chemical Industries, Ltd., MEK-ST, particle diameter = 10 to 15 nm, solids fraction = 30%) were mixed to uniformity and the solvent was distilled off at reduced pressure at 80°C using an evaporator. The yield was 249.7 g and the viscosity was 40 Pa·s. 30 g of this resin composition, 9 g hydrogenated bisphenol (Japan Epoxy Resin Co., Ltd., YX-8040, epoxy equivalent weight = 1,000, solid hydrogenated epoxy resin), and 25 g YX-8000 were each weighed out and were mixed at 80°C to uniformity. Stearic acid as a mold release agent was then admixed to uniformity at 80°C so as to provide 0.5 weight% with reference to the entire weight. After cooling to 50°C, a cationic polymerization initiator (Sanshin Chemical Industry Co., Ltd., San-Aid SI-60L, solids fraction = 50%) was added so as to provide 1 weight% (0.5 weight% as the solids fraction) with reference to the total weight and mixing to uniformity was carried out.

Examples 11-3 and 26 to 33 and Comparative Example 5

A curing process was performed as in Example 1-5 on the resin compositions (11), (19) to (23), and (25) obtained in Production Examples 11, 19 to 23, and 25 (Examples 11-3, 26 to 30, and 32). A curing process was performed by a method as described below on the resin compositions (24) and (26) and comparative resin composition (4) obtained in Production Examples 24 and 26 and Comparative Production Example 4 (Examples 31 and 33 and Comparative Example 5).

(Curing method for resin composition (24))

An ultraviolet curing process was run as follows in the first step. Using a silicone rubber frame, the resin composition was placed, so as to provide a thickness of 1 mm, on SUS304 (Japan Testpanel Co., Ltd., #800 surface finish) and an ultraviolet cure was carried out at a cumulative exposure dose of 1 J/cm$^2$ using a UV irradiator (Eye Graphics Co., Ltd.) equipped with an ultrahigh-pressure mercury lamp. Curing in the second step was carried out for 1 hour at 330°C (15°C/minute temperature rise from room temperature).

(Curing method for resin composition (26))

An ultraviolet curing process was run as follows in the first step. Using 1 mm-thick silicone sheet to provide the gap, the resin composition was placed so as to provide a thickness of 1 mm between two quartz glass panels. An ultraviolet cure was carried out through the quartz glass on one side at a cumulative exposure dose of 2J/cm$^2$ using a UV irradiator (Eye Graphics Co., Ltd.) equipped with an ultrahigh-pressure mercury lamp. Curing in the second step was carried out for 1 hour at 330°C (15°C/minute temperature rise from room temperature).

(Curing method for comparative resin composition (4))

The curing process was run as in Example 1-5, with the exception that 1 hour at 230°C (15°C/minute temperature rise from room temperature) was used for the curing conditions in the second step.
The composition, structure, and properties were measured and evaluated using the previously described measurement and evaluation methods on the cured molded articles fabricated in Examples 1-1 to 1-3, 1-5, 1-6, 2-2, 2-4, 3-2, 3-4, 11-3, and 26 to 33, Reference Example 1, and Comparative Examples 1-1, 1-2, and 5. The results are given in Table 10.
[Table 10]

| | Resin composition | Amount of metal element amount (wt%) | Metal element having n-1 or n-2 bonds to hydrocarbon groups (atom%) | Amount of metal element having a Y-M bond (atom%) | Particulate inorganic compound (wt%) | Organic resin component (wt%) | Presence or absence of carboxylic acid-type structure and/or other skeleton | Oxygen amount originating with carboxylic acid-type structure and/or an oxane ring (wt%) | Amount of shrinkage by primary cure (First step | Transmittance (%, at 500 nm) | Pencil hardness | Transmittance after UV resistance testing (%, at 500 nm) | Weight after secondary cure/Weight after primary cure (wt%) |
|---|---|---|---|---|---|---|---|---|---|---|---|---|---|
| Example 1-1 | Resin composition (1) | 27.1 | 0 | 34.4 | <1 | 31 | Present | - | 0.4 | 91.2 | H | 89.1 | 98.2 |
| Example 1-2 | Resin composition (1) | 27.5 | 0 | 32.9 | <1 | 31 | Present | - | 0.4 | 90.9 | 5H | 90.9 | 95.3 |
| Example 1-3 | Resin composition (1) | 27.5 | 0 | 30.9 | <1 | 32 | Present | 8 | 0.4 | 91.1 | 5H | 90.9 | 94.8 |
| Example 1-5 | Resin composition (1) | 28.0 | 0 | 24.6 | <1 | 32 | Present | 8 | 0.4 | 90.8 | 7H or more | 90.7 | 93.3 |
| Example 1-6 | Resin composition (1) | 27.9 | 0 | 28.3 | <1 | 32 | Present | 8 | 0.4 | 91 | 7H or more | 90.9 | 94.2 |
| Example 2-2 | Resin composition (2) | 19.7 | 0 | 30.8 | <1 | 51 | Present | - | 0.7 | 87.3 | 4H | 86.9 | - |
| Example 2-4 | Resin composition (2) | 20.1 | 0 | 28.3 | <1 | 51 | Present | - | 0.7 | 83.7 | 5H | 82.8 | - |
| Example 3-2 | Resin composition (3) | 11.9 | 0 | 30.8 | <1 | 70 | Present | - | 1 | 86.7 | 3H | 83.3 | - |

(continued)

EP 2 479 209 A1

| | Resin composition | Amount of metal element amount (wt%) | Metal element having n-1 or n-2 bonds to hydrocarbon groups (atom%) | Amount of metal element having a Y-M bond (atom%) | Particulate inorganic compound (wt%) | Organic resin component (wt%) | Presence or absence of carboxylic acid-type structure and/or other skeleton | Oxygen amount originating with carboxylic acid-type structure and/or an oxyane ring (wt%) | Amount of shrinkage by primary cure (First step) | Transmittance (%, at 500 nm) | Pencil hardness | Transmittance after UV resistance testing (%, at 500 nm) | Weight after secondary cure/Weight after primary cure (wt%) |
|---|---|---|---|---|---|---|---|---|---|---|---|---|---|
| Example 3-4 | Resin composition (3) | 11.9 | 0 | 28.4 | <1 | 71 | Present | - | 1 | 81.1 | 4H | 75.6 | - |
| Reference Example 1 | Resin composition (1) | 26.9 | 0 | 47.6 | <1 | 30 | Present | - | 0.4 | 92 | F | 88.7 | - |
| Comparative Example 1-1 | Comparative resin composition (1) | 0 | 0 | 0 | <1 | 100 | Present | - | 14 | 88.7 | 4H | 79.6 | - |
| Comparative Example 1-2 | Comparative resin composition (1) | 0 | 0 | 0 | <1 | 100 | Present | - | 1.4 | 81 | 4H | 61.3 | - |
| Example 26 | Resin composition (18) | 28.8 | 0 | 29.5 | <1 | 30 | Present | - | 04 | 90.9 | 7H or more | 90.7 | 92.2 |
| Example 11-3 | Resin composition (11) | 21.6 | 0 | - | <1 | 32 | Present | - | 04 | 88.6 | 5H | 87.7 | - |
| Example 27 | Resin composition (20) | 20.0 | 0 | 29.8 | <1 | 31 | Present | - | 0.4 | 88.3 | - | 87.4 | 93.2 |

57

(continued)

| | Resin composition | Amount of metal element amount (wt%) | Metal element having n-1 or n-2 bonds to hydrocarbon groups (atom%) | Amount of metal element having a Y-M bond (atom%) | Particulate inorganic compound (wt%) | Organic resin component (wt%) | Presence or absence of carboxylic acid-type structure and/or other skeleton | Oxygen amount originating with carboxylic acid-type structure and/or an oxyane ring (wt%) | Amount of shrinkage by primary cure (First step | Transmittance (%, at 500 nm) | Pencil hardness | Transmittance after UV resistance testing (%, at 500 nm) | Weight after secondary cure/Weight after primary cure (wt%) |
|---|---|---|---|---|---|---|---|---|---|---|---|---|---|
| Example 28 | Resin composition (21) | 19.5 | 0 | - | <1 | 30 | Present | - | 0.4 | 90.5 | 5H | 90.1 | 92.1 |
| Example 29 | Resin composition (22) | 19.7 | 24.8 | - | <1 | 32 | Present | - | 0.5 | 84.5 | - | 78.1 | 90.5 |
| Example 30 | Resin composition (23) | 14.9 | 0 | - | <1 | 29 | Present | - | 0.4 | 82.6 | - | 77.3 | 91.3 |
| Example 31 | Resin composition (24) | 28.2 | 0 | 25.6 | <1 | - | Present | - | 0.4 | 90.9 | 7H or more | 89.2 | - |
| Example 32 | Resin composition (25) | 21.3 | 0 | - | <1 | - | Present (No other skeleton) | - | 1 or more | 84.3 | - | 64.1 | 89.1 |
| Example 33 | Resin composition (26) | 21.7 | 0 | - | <1 | - | Present (No other skeleton) | - | 1 or more | 86.8 | - | 86.3 | 89.3 |
| Comparative Example 5 | Comparative resin composition (4) | 6.3 | 0 | 10.8 | 13.5 | 75 | Present (No carboxylic acid-type structure) | - | - | 83.2 | 2H | 68.8 | - |

EP 2 479 209 A1

58

The examples, comparative examples, and reference examples demonstrate the following.

Comparative Examples 1 to 3 are examples in which curing was performed using comparative resin compositions (1) to (3), respectively, which did not contain a condensable group-containing polysiloxane compound. When these are compared with Examples 1 to 12, the cured molded articles obtained in Comparative Examples 1 to 3 have a lower transmittance than in Examples 1 to 12 and also have a substantially inferior transmittance post-UV resistance testing, which is an index for the heat resistance. When Reference Examples 1 to 12 are correspondingly compared with Examples 1 to 12, in almost all the examples the cured molded article obtained in the reference example, in which only the first step cure process was run, has a lower pencil hardness than in the particular example, thus showing that a satisfactory surface hardness, i.e., abrasion resistance, is not obtained. Based on the results in Comparative Example 4, when only the second step curing process is carried out and the first step is not implemented, large quantities of bubbles are produced and it is demonstrated that a cured material capable of use as a product cannot be obtained. These bubbles are thought to be caused by the vaporization of the, e.g., water and alcohol, that are secondarily produced by the condensation reactions of the polysiloxane compound.

Accordingly, it has been shown that for the first time a cured molded article presenting an excellent appearance due to a low shrinkage ratio and having various excellent properties, e.g., heat resistance, abrasion resistance (high surface hardness), and transparency, can be efficiently obtained by submitting a curable resin composition that comprises a condensable group-bearing polysiloxane compound, a ring-opening polymerizable group-bearing compound, and a curing agent to an at least two-stage curing process having a first step and a second step.

A comparison of Example 1-3 with Example 1-7, Example 2-2 with Example 2-5, and Example 3-2 with Example 3-5 shows that the execution of the second step under an atmosphere having a lower oxygen concentration can provide an additional increase in the transparency and surface hardness of the resulting cured molded article.

Resin compositions (1) to (7) and comparative resin composition (1) are resin compositions that use the same ring-opening polymerizable group-bearing compound and polysiloxane compound, but at different blending ratios therebetween, with the percentage content of polysiloxane compound declining in the sequence resin composition (7) (polysiloxane compound: 95 parts), resin composition (6) (polysiloxane compound: 90 parts), resin composition (8) (polysiloxane compound: 80 parts), resin composition (1) (polysiloxane compound: 70 parts), resin composition (2) (polysiloxane compound: 50 parts), resin composition (3) (polysiloxane compound: 30 parts), resin composition (4) (polysiloxane compound: 10 parts), resin composition (5) (polysiloxane compound: 5 parts), and comparative resin composition (1) (polysiloxane compound: 0 part).

The results of the examples that used these resin compositions and that carried out a curing process having a first step and a second step (350°C $\times$ 10 minutes) (Examples 7-2, 6-2, 8-2, 1-6, 2-4, 3-4, 4-2, 5-2 and Comparative Example 1-2) demonstrated that additional increases in both the surface hardness and transparency could be obtained by having the polysiloxane compound content be 5 to 95 mass% relative to the total mass of the polysiloxane compound and ring-opening polymerizable group-bearing compound of 100 mass%.

A comparison of these Examples 7-2, 6-2, 8-2, 1-6, 2-4, 3-4, 4-2, 5-2 and Comparative Example 1-2 shows that a larger percentage content for the polysiloxane compound provides a higher pencil hardness for the resulting cured molded article and also a higher transparency. However, when the examples in which only the first step curing process was carried out (Reference Examples 7, 6, 8, 1, 2, 3, 4, 5 and Comparative Reference Example 1) are compared, the pencil hardness and transmittance of the cured molded article do not depend on the percentage content of the polysiloxane compound. This shows that the effects of an enhanced surface hardness and transparency are not obtained when the percentage content of the polysiloxane compound is simply increased, but rather are effects obtained, for the first time, by increasing the percentage content of the polysiloxane compound (preferably 5 to 95 mass% relative to the total mass of the polysiloxane compound and ring-opening polymerizable group-bearing compound of 100 mass%) in the production process of the present invention comprising a curing process having a specific first step and second step.

The results shown in Table 8 demonstrate that, when a resin composition that contains an oxetane ring-bearing compound is used, the resulting molded article has an even better transmittance and surface hardness. The results shown in Table 9 demonstrate that an excellent transmittance and surface hardness can be manifested even when various additives are added. The results in Table 10 demonstrate that a cured molded article obtained using the production process of the present invention has a unique composition and structure. The following may be additionally understood from the results in Table 10. (1) Comparing Reference example 1 with examples 1-1 and 1-2, these examples provide a molded article with less Y-M bond than in Reference Example 1 because condensation of the inorganic compound is advanced by the second step, and as a consequence the hardness is improved to, respectively, H and 5H from the F of Reference Example 1. (2) Comparing Comparative Examples 1-1 and 1-2 with Examples 1-1 and 1-2, Examples 1-1 and 1-2 provide a better transparency than the comparative examples and also a better transmittance post-UV resistance testing (inhibition of UV-induced deterioration) because the molded article contains a metalloxane component and has a highly crosslinked structure.

**Claims**

1. A process for production of a cured molded article from a curable resin composition that comprises a condensable inorganic compound, a curable organic compound, and a curing agent, the production process comprising:

   a first step composed of a step of thermally curing the curable resin composition at 80 to 200°C and/or a step of curing the curable resin composition by exposure to active-energy radiation; and
   a second step of subjecting the cured material obtained in the first step to a thermal cure at above 200°C but not more than 500°C.

2. A process for production of a cured molded article from a curable resin composition that comprises a condensable group-bearing polysiloxane compound, a ring-opening polymerizable group-bearing compound, and a curing agent, the production process comprising:

   a first step composed of a step of thermally curing the curable resin composition at 80 to 200°C and/or a step of curing the curable resin composition by exposure to active-energy radiation; and
   a second step of subjecting the cured material obtained in the first step to a thermal cure at above 200°C but not more than 500°C, in an inert atmosphere having an oxygen concentration of not more than 10 volume%, wherein the curable organic compound does not contain a metal element.

3. The process for production of a cured molded article according to claim 1 or 2, wherein the content of the condensable group-bearing polysiloxane compound is from 5 to 95 mass% relative to the total mass of the condensable group-bearing polysiloxane compound and the ring-opening polymerizable group-bearing compound of 100 mass%.

4. The process for production of a cured molded article according to any of claims 1 to 3, wherein the ring-opening polymerizable group-bearing compound is a polyfunctional compound, and the ring-opening polymerizable group is an epoxy group and/or an oxetane ring.

5. The process for production of a cured molded article according to any of claims 1 to 4, wherein the first step is a curing step that uses a mold.

6. The process for production of a cured molded article according to claim 5, further comprising a demolding step between the first step and the second step.

7. The process for production of a cured molded article according to any of claims 1 to 6, wherein the step of curing by exposure to active-energy radiation is a photocuring step in which curing is performed by exposure to ultraviolet radiation or visible light having a wavelength of 180 to 500 nm.

8. The process for production of a cured molded article according to any of claims 1 to 7, wherein the condensable group is at least one group selected from the group consisting of a Si-O-R group (R represents a hydrocarbon group), a Si-OH group, a Si-X group (X represents a halogen atom), and a Si-H group.

9. A cured molded article obtained by the production process according to any of claims 1 to 8.

10. A cured molded article that comprises a metalloxane component and an organic resin component, wherein:

    the content of a metal element constituting the metalloxane component is at least 10 mass% relative to the total mass of the cured molded article of 100 mass%;
    the content, in the metal element constituting the metalloxane component, of the metal element for which the number of bonds with a hydrocarbon group is n-1 or n-2 (n is an atomic valence of the metal element and represents an integer equal to or greater than 2) is not more than 50 atom% relative to the total amount of the metal element constituting the metalloxane component of 100 atom%;
    the content, in the metal element constituting the metalloxane component, of the metal element having a bond represented by Y-M (M represents a metal element and Y represents at least one type selected from the group consisting of a hydrogen atom, a halogen atom, a hydroxyl group, and an RO group (R represents a hydrocarbon group)) is not more than 35 atom% relative to the total amount of the metal element constituting the metalloxane component of 100 atom%; and
    the content of a component presenting a particulate form in the metalloxane component is not more than 50 mass% relative to the total mass of the metalloxane component of 100 mass%.

11. The cured molded article according to claim 10, wherein the content of the organic resin component is from 0.1 to 60 mass% relative to the total mass of the cured molded article of 100 mass%.

12. The cured molded article according to claim 10 or 11, wherein the cured molded article has a parallel transmittance at 500 nm of at least 80%.

13. The cured molded article according to any of claims 10 to 12, wherein the cured molded article contains a carboxylic acid-type structure and/or an ether skeleton.

14. The cured molded article according to any of claims 10 to 13, wherein the cured molded article is obtained by curing a curable resin composition that comprises a condensable inorganic compound, a curable organic compound, and a curing agent.

15. The cured molded article according to any of claims 9 to 14, wherein the cured molded article is a cured molded article for optical applications.

16. The cured molded article according to any of claims 9 to 15, wherein the cured molded article is a cured molded article for a lens.

17. The cured molded article according to any of claims 9 to 16, wherein the cured molded article is a transparent sheet.

# FIG.1

Criterion= 8.075941E-02
Start= -129.5286 ppm (-10296.86 Hz)
End = -30.7123 ppm (-2441.47 Hz)
—1-δ:- 47.4676 ppm
Δv: 187.368 Hz
Integral: 5.4661(2.64%)
—2-δ:- 56.4971 ppm
Δv: 232.952 Hz
Integral: 183.9738(88.22%)
3-δ:- 64.9361 ppm
Δv: 208.095 Hz
integral: 208.5436(100.0%)

# FIG.2

Criterion= 0.0930085
Start= -110.774 ppm (-8806.98 Hz)
End = -9.2505 ppm (-736.16 Hz)
—1-δ:- 57.7418 ppm
Δv: 297.976 Hz
integral: 88.8891(32.66%)
—2-δ:- 65.4548 ppm
Δv: 244.0 Hz
Integral: 272.1297(100.0%)

FIG.3

S-4800 25.0kV 8.1mm x100k TE          500nm

FIG.4

S-4800 25.0kV 8.0mm x100k TE          500nm

| INTERNATIONAL SEARCH REPORT | International application No. |
|---|---|
| | PCT/JP2010/066066 |

A.   CLASSIFICATION OF SUBJECT MATTER
*C08J5/00*(2006.01)i, *B29C71/02*(2006.01)i, *C08G59/02*(2006.01)i, *C08G65/18*
(2006.01)i, *C08G77/04*(2006.01)i, *C08J7/00*(2006.01)i, *G02C7/02*(2006.01)i

According to International Patent Classification (IPC) or to both national classification and IPC

B.   FIELDS SEARCHED

Minimum documentation searched (classification system followed by classification symbols)
C08J5/00-5/02, C08J5/12-5/22, B29C39/00-39/44, B29C71/00-71/02,
C08G59/00-59/72, C08G65/00-67/04, C08G77/00-77/62, C08J7/00-7/02,
C08J7/12-7/18, C08K3/00-13/08, C08L1/00-101/14

Documentation searched other than minimum documentation to the extent that such documents are included in the fields searched
  Jitsuyo Shinan Koho          1922-1996   Jitsuyo Shinan Toroku Koho   1996-2010
  Kokai Jitsuyo Shinan Koho    1971-2010   Toroku Jitsuyo Shinan Koho   1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2007-008996 A  (Dow Corning Toray Co., Ltd.), 18 January 2007 (18.01.2007), claims; paragraphs [0048], [0050], [0051] & US 2009/0118440 A1    & EP 1904579 A & WO 2007/001039 A1    & DE 602006016607 D & KR 10-2008-0031339 A   & CN 101213257 A & AT 479726 T | 1-9,15-17 |
| X | JP 2003-138104 A  (Shin-Etsu Chemical Co., Ltd.), 14 May 2003 (14.05.2003), claims; paragraphs [0051], [0053] to [0065] (Family: none) | 1-9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|   02 December, 2010 (02.12.10) |   14 December, 2010 (14.12.10) |

| Name and mailing address of the ISA/ | Authorized officer |
|---|---|
|   Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/066066 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2002-502906 A  (Nisshinbo Industries, Inc.), 29 January 2002 (29.01.2002), claims; paragraphs [0025] to [0051] & US 6777461 B1            & EP 934967 A1 & EP 1054921 A            & WO 1999/040146 A1 & DE 69900671 D            & DE 69900671 T & AU 2180199 A | 1-9 |
| A | JP 2008-133442 A  (Nippon Shokubai Co., Ltd.), 12 June 2008 (12.06.2008), entire text & JP 2008-133439 A        & US 2008/0085985 A1 & EP 2067824 A1 | 1-9,15-17 |

Form PCT/ISA/210 (continuation of second sheet) (July 2009)

**INTERNATIONAL SEARCH REPORT**

International application No.

PCT/JP2010/066066

| **Box No. II**    **Observations where certain claims were found unsearchable (Continuation of item 2 of first sheet)** |
| --- |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| **Box No. III**    **Observations where unity of invention is lacking (Continuation of item 3 of first sheet)** |
| --- |

This International Searching Authority found multiple inventions in this international application, as follows:

    The matter common to the inventions in claims 1 - 17 pertains to a cured molded body comprising an inorganic compound component and an organic resin component.
    However, the search revealed that the above-said common matter is not novel, since said common matter is disclosed in JP 2008-133442 A (Nippon Shokubai Co., Ltd.), 12 June 2008 (12.06.2008), claims.

                       (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1 - 9, 15 - 17

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/066066 |

Continuation of Box No.III of continuation of first sheet(2)

As a result, the above-said common matter does not make a contribution over the prior art, and therefore is not a special technical feature within the meaning of PCT Rule 13.2, second sentence.

Furthermore, since there is no other common matter considered to be a special technical feature within the meaning of PCT Rule 13.2, second sentence, any technical relationship within the meaning of PCT Rule 13 cannot be found among those different inventions.

Consequently, the inventions in claims 1 - 17 do not comply with the requirement of unity of invention.

Form PCT/ISA/210 (extra sheet) (July 2009)

**EP 2 479 209 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008088249 A
- JP 2008133442 A
- JP 2009155442 A